# EUROPÄISCHE PATENTANMELDUNG

(11) **EP 4 113 725 A1**
(43) Veröffentlichungstag der Anmeldung: **04.01.2023**
(21) Anmeldenummer: 22179249.2
(22) Anmeldetag: 15.06.2022
(51) Int. Cl.: H01M 50/247, H01M 50/30, H01M 50/502, H01M 50/578

(54) **AKKUPACK**

(30) Priorität: 30.06.2021 DE 102021206828
(71) Anmelder: Robert Bosch GmbH, 70442 Stuttgart (DE)
(72) Erfinder: Mastrobattista, Stefano, 72127 Kusterdingen-Wankheim (DE); Ruthardt, Aaron, 71157 Hildrizhausen (DE); Moesle, Julian, 72770 Reutlingen (DE); Fanzutti, Sara, 72127 Kusterdingen (DE); Zielke, Christian, 72800 Eningen Unter Achalm (DE); Alisic, Haris, 72127 Kusterdingen-Wankheim (DE); Trif, Christian, 72127 Kusterdingen (DE)

(57) **Zusammenfassung**

Die Erfindung betrifft einen Akkupack mit einem Gehäuse, mit zumindest zwei Akkuzellen, mit einer Schutzvorrichtung zum Schutz des Akkupacks bei einer thermisch unkontrollierbaren Situation, wobei die Schutzvorrichtung eine erste Schutzeinheit zur thermischen Isolierung und mechanischen Stabilisierung benachbarter Akkuzellen, eine zweite Schutzeinheit zur elektrischen Trennung von Akkuzellen bei einer thermisch unkontrollierbaren Situation und eine dritte Schutzeinheit zu einem gezielten Auslass von Gas bei einer thermisch unkontrollierbaren Situation aufweist.

## Beschreibung

### Stand der Technik

In der DE 10 2019 213 965 A1 ist ein Akkupack mit einem Zellenhalter beschrieben.

### Offenbarung der Erfindung

Die Erfindung betrifft einen Akkupack mit einem Gehäuse, mit zumindest zwei Akkuzellen, mit einer Schutzvorrichtung zum Schutz des Akkupacks bei einer thermisch unkontrollierbaren Situation, wobei die Schutzvorrichtung eine erste Schutzeinheit zur thermischen Isolierung und mechanischen Stabilisierung benachbarter Akkuzellen, eine zweite Schutzeinheit zur elektrischen Trennung von Akkuzellen bei einer thermisch unkontrollierbaren Situation und eine dritte Schutzeinheit zu einem gezielten Auslass von Gas bei einer thermisch unkontrollierbaren Situation aufweist. Vorteilhaft kann dadurch die Sicherheit des Akkupacks erhöht werden.

Der Akkupack ist insbesondere Teil eines Systems, das sich aus dem Akkupack und einem Verbraucher zusammensetzt, wobei der Verbraucher während des Betriebs über den Akkupack mit Energie versorgt wird. Der Akkupack kann beispielsweise als ein Handwerkzeugmaschinenakkupack oder als ein Elektrofahrradakkupack ausgebildet sein. Der Akkupack ist insbesondere als ein Wechselakkupack ausgebildet, der bevorzugt werkzeuglos lösbar mit dem Verbraucher ausgebildet ist. Der Akkupack ist insbesondere verbindbar mit einer Ladevorrichtung zum Aufladen des Akkupacks ausgebildet. Alternativ oder zusätzlich kann der Akkupack auch derart ausgebildet sein, dass er im mit dem Verbraucher verbundenen Zustand aufladbar ist.

Der Verbraucher kann insbesondere als ein Gartengerät, wie beispielsweise ein Rasenmäher oder eine Heckenschere, als ein Haushaltsgerät, wie beispielsweise ein elektrischer Fensterreiniger oder Handstaubsauger, als eine Handwerkzeugmaschine, wie beispielsweise ein Winkelschleifer, ein Schrauber, eine Bohrmaschine, ein Bohrhammer, etc., als ein elektrisches Fortbewegungsmittel, wie beispielsweise ein Elektrofahrrad in Form eines Pedelecs oder eBikes, oder als ein Messwerkzeug, wie beispielsweise ein Laserentfernungsmessgerät, ausgebildet sein. Des Weiteren ist auch denkbar, dass der Verbraucher als ein anderes insbesondere tragbares Gerät ausgebildet ist, wie beispielsweise eine Baustellenbeleuchtung, ein Absauggerät oder ein Baustellenradio.

Das Gehäuse des Akkupacks ist vorzugsweise als ein Außengehäuse ausgebildet. Der Akkupack, insbesondere das Gehäuse des Akkupacks, kann über eine mechanische Schnittstelle lösbar mit dem Verbraucher und/oder einer Ladevorrichtung verbindbar sein. Das Gehäuse des Akkupacks kann ein oder mehrere Gehäuseteile aufweisen. Das Gehäuse weist zumindest ein Gehäuseteil auf, das als ein Außengehäuseteil ausgebildet ist. Das Außengehäuseteil grenzt dabei den Akkupack nach außen ab und kann von einem Benutzer berührt werden. Zudem kann das Gehäuse zumindest ein Innengehäuseteil aufweisen, dass teilweise oder vollständig von dem zumindest einen Gehäuseteil umschlossen wird. Insbesondere weist das Gehäuse des Akkupacks einen Zellenhalter zur Aufnahme der Akkuzellen auf. Vorzugsweise ist der Zellenhalter als eines der Gehäuseteile ausgebildet, wobei der Zellenhalter als ein Außengehäuseteil und/oder als ein Innengehäuseteil ausgebildet sein kann. Das Gehäuse des Akkupacks kann einen oder mehrere Zellenhalter aufweisen. Die Gehäuseteile sind miteinander kraft-, form- und/oder stoffschlüssig verbunden. Der Zellenhalter kann Einzelzellenaufnahmen aufweisen, die zur Aufnahme einer einzelnen Ackuzelle ausgebildet sind.

Der Zellenhalter ist vorzugsweise aus einem Kunststoff, insbesondere einem thermoplastischen Kunststoff, ausgebildet. Der Zellenhalter ist bevorzugt aus einem temperaturbeständigen Kunststoff, bevorzugt aus einem faserverstärkten Kunststoff, ausgebildet. Der Zellenhalter ist insbesondere einteilig oder einstückig ausgebildet. Unter einstückig soll im Zusammenhang dieser Anmeldung insbesondere ein Bauteil verstanden werden, dass aus einem Stück ausgebildet und nicht aus mehreren Bauteilen, die stoffschlüssig und/oder kraft- und/oder formschlüssig miteinander verbunden sind, ausgebildet ist. Ein einstückiges Bauteil besteht demnach aus einem einzigen Material. Unter einteilig soll im Zusammenhang dieser Anmeldung mehrere Bauteile, die stoffschlüssig, beispielsweise über ein 2K Spritzguss oder einen Stoffschluss, miteinander verbunden sind, verstanden werden. Eine einteilige Komponente kann somit aus einem oder mehreren Materialien bestehen. Alternativ ist auch denkbar, dass der Zellenhalter mehrteilig ausgebildet ist, wobei die unterschiedlichen Teile kraft- und/oder formschlüssig miteinander verbunden sind. Der Akkupack kann einen oder mehrere Zellenhalter, die nebeneinander und/oder hintereinander angeordnet sind, aufweisen.

Über die mechanische Schnittstelle ist der Akkupack kraft- und/oder formschlüssig mit dem Verbraucher verbindbar. Vorteilhaft umfasst die mechanische Schnittstelle zumindest ein Betätigungselement, über das die Verbindung des Akkupacks mit dem Verbraucher und/oder mit der Ladevorrichtung lösbar ist. Das Betätigungselement kann beispielsweise als ein Knopf, ein Hebel oder als ein Taster ausgebildet sein. Das Betätigungselement kann am Akkupack oder am Verbraucher angeordnet sein.

Zudem weist der Akkupack zumindest eine elektrische Schnittstelle auf, über die der Akkupack mit dem Verbraucher und/oder mit der Ladevorrichtung elektrisch verbindbar ist. Über die elektrische Verbindung kann der Akkupack beispielsweise geladen und/oder entladen werden. Alternativ oder zusätzlich ist auch denkbar, dass über die elektrische Schnittstelle Informationen von dem Akkupack an den Verbraucher und umgekehrt übermittelbar sind. Die elektrische Schnittstelle ist bevorzugt als eine Kontaktschnittstelle ausgebildet, bei der die elektrische Verbindung über einen physischen Kontakt zumindest zweier leitfähiger Bauteile erfolgt. Die elektrische Schnittstelle umfasst bevorzugt zumindest zwei elektrische Kontaktelemente. Insbesondere ist einer der elektrischen Kontaktelemente als ein Plus-Kontakt und das andere elektrische Kontaktelement als ein Minus-Kontakt ausgebildet. Zusätzlich kann die elektrische Schnittstelle zumindest einen Zusatzkontakt aufweisen, der dazu ausgebildet ist, zusätzliche Informationen an den Verbraucher und/oder an die Ladevorrichtung zu übertragen. Die Zusatzkontakte können als Signalkontakte, Codierkontakte, Temperaturkontakte, Bus-Kontakte etc. ausgebildet sein. Die elektrischen Kontaktelemente können beispielsweise als federnde Kontaktelemente in Form von Kontakttulpen oder als Flachkontakte in Form von Kontaktklingen ausgebildet sein. Alternativ oder zusätzlich kann die elektrische Schnittstelle ein sekundäres Ladespulenelement zur induktiven Ladung aufweisen. Die elektrischen Kontaktelemente können auf einer Leiterplatte angeordnet oder Teil einer Buchse oder eines Steckers sein.

Des Weiteren umfasst der Akkupack vorzugsweise eine Elektronik. Die Elektronik kann beispielsweise eine Leiterplatte, eine Recheneinheit, eine Steuereinheit, einen Transistor, einen Kondensator, und/oder eine Speichereinheit aufweisen. Zusätzlich oder alternativ ist ebenfalls denkbar, dass Informationen von der Elektronik ermittelt werden. Die Elektronik ist zur Steuerung oder Regelung des Akkupacks und/oder des Verbrauchers ausgebildet. Die Elektronik umfasst insbesondere ein BMS (engl. Battery Management System), das zur Überwachung des Akkupacks ausgebildet ist. Das BMS ist insbesondere dazu ausgebildet, eine Überladung und/oder eine Tiefenentladung des Akkupacks zu verhindern. Vorzugsweise ist das BMS zur korrekten Zellsymmetrierung ausgebildet. Die Elektronik kann zudem ein oder mehrere Sensorelemente aufweisen, beispielsweise einen Temperatursensor zur Ermittlung der Temperatur innerhalb des Akkupacks oder einen Bewegungssensor zur Ermittlung von Bewegungen. Die Elektronik kann alternativ oder zusätzlich ein Kodierungselement, wie beispielsweise ein Kodierungswiderstand, aufweisen. Die elektrischen Kontaktelemente der elektrischen Schnittstelle des Akkupacks können auf der Leiterplatte der Elektronik angeordnet oder mit der Leiterplatte verbunden sein. Unter einer Leiterplatte soll im Zusammenhang dieser Anmeldung ein Schaltungsträger verstanden werden, der ein organisches oder anorganisches Substrat, beispielsweise IMS, aufweist. Die Leiterplatte kann als eine starre Leiterplatte oder als eine flexible Leiterplatte ausgebildet sein.

Der Zellenhalter weist zumindest eine Akkuzellenaufnahme auf. Die Akkuzellenaufnahme kann als eine Einzelzellenaufnahme zur Aufnahme einer einzelnen Ackuzelle oder als eine Mehrzellenaufnahme zur Aufnahme mehrerer Akkuzellen ausgebildet sein. Die Akkuzellenaufnahme ist insbesondere derart ausgebildet, dass im mit der Akkuzelle verbundenen Zustand ein Großteil der Außenfläche, insbesondere ein Großteil der Mantelfläche der Akkuzelle, von der Akkuzellenaufnahme umschlossen ist. Insbesondere ist zumindest 60%, vorzugsweise zumindest 75%, bevorzugt zumindest 90%, der Mantelfläche der Akkuzelle von der Akkuzellenaufnahme umschlossen. Vorzugsweise ist die Akkuzellenaufnahme derart ausgebildet, dass die zumindest eine Akkuzelle an einer Innenfläche der Akkuzelle anliegt und durch die Akkuzellenaufnahme fixiert ist. Der Zellenhalter weist zwischen zwei Akkuzellenaufnahmen eine Wandung auf, die die Akkuzellenaufnahmen räumlich und elektrisch voneinander isoliert. Die Wandung weist eine Mindestwandstärke auf, wobei die Mindestwandstärke im Verhältnis zu dem Zellendurchmesser in einem Bereich zwischen 3% und 5% liegt. Beispielsweise entspricht die Mindestwandstärke bei einem Zellenhalter für 18650 Akkuzellen zumindest 3,3% und bei einem Zellenhalter für 21700 Akkuzellen zumindest 4,2%.

Die Akkuzelle kann als eine galvanische Zelle ausgebildet sein, die einen Aufbau aufweist, bei dem ein Zellpol an einem Ende und ein weiterer Zellpol an einem gegenüberliegenden Ende zu liegen kommen. Insbesondere weist die Akkuzelle an einem Ende einen positiven Zellpol und an einem gegenüberliegenden Ende einen negativen Zellpol auf. Bevorzugt sind die Akkuzellen als NiCd- oder NiMh-, besonders bevorzugt als lithiumbasierte Akkuzellen bzw. Li-Ion Akkuzellen, ausgebildet. Alternativ ist beispielhaft auch denkbar, dass die Akkuzelle als eine Pouchzelle ausgebildet ist. Die Akkuspannung des Akkupacks ist in der Regel ein Vielfaches der Spannung einer einzelnen Akkuzelle und ergibt sich aus der Schaltung (parallel oder seriell) der Akkuzellen. Bei gängigen Akkuzellen mit einer Spannung von 3,6 V ergeben sich somit beispielhafte Akkuspannung von 3,6 V, 7,2 V, 10, 8 V, 14,4 V, 18 V, 36 V, 54 V, 108 V etc. Bevorzugt ist die Akkuzelle als zumindest im Wesentlichen zylinderförmige Rundzelle ausgebildet, wobei die Zellpole an Enden der Zylinderform angeordnet sind.

Insbesondere weist der Akkupack zumindest einen Zellverbinder auf, der zur elektrischen Verbindung der Akkuzellen mit der Elektronik, insbesondere mit der Leiterplatte und/oder mit den elektrischen Kontaktelementen, ausgebildet ist. Die Zellverbinder können einstückig, einteilig oder mehrteilig ausgebildet sein. Die Zellverbinder können kraft- und/oder formschlüssig mit dem Gehäuse des Akkupacks, insbesondere dem Zellenhalter, verbunden sein. Es ist ebenso denkbar, dass der Zellverbinder teilweise oder vollständig von dem Gehäuse, insbesondere dem Zellenhalter, umspritzt ist. Der Zellverbinder ist aus einem metallischen Werkstoff ausgebildet. Der Zellverbinder kann beispielsweise aus einem Reinkupfer (Kupfergehalt >95%), einer Kupferlegierung, Aluminium, einer Aluminiumlegierung oder einer Nickel-Verbindung ausgebildet sein. Die Zellverbinder können an Stirnseiten oder an der Mantelfläche der Akkuzellen mit diesen stoffschlüssig verbunden sein.

Der Zellverbinder weist ein Zellenverbindungselement zur elektrischen Verbindung der Akkuzellen und ein Leiterplattenverbindungselement zur elektrischen Verbindung mit der Leiterplatte auf. Das Zellenverbindungselement liegt dabei direkt und unmittelbar an der Akkuzelle, insbesondere einem Zellpol der Ackuzelle, an und ist bevorzugt stoffschlüssig mit dem Zellpol verbunden. Der Stoffschluss kann über ein Lötverfahren oder über ein Schweißverfahren, insbesondere über ein Widerstandsschweißverfahren oder über ein Laserschweißverfahren, erfolgen. Es ist ebenso denkbar, dass der Stoffschluss über Drahtbonden, beispielsweise über Thermokompressionsbonden, Thermosonic-Ball-Wedge-Bonden oder Ultraschall-Wedge-Wedge-Bonden erfolgt. Die Schweißverbindung unterscheidet sich in diesem Kontext von der Lötverbindung insbesondere dadurch, dass bei der Schweißverbindung ein teilweises Aufschmelzen der zu verbindenden Bauteile erfolgt. Der Stoffschluss kann unter Zuhilfenahme eines Stoffschlussmittels erfolgen. Im Falle eines Lötverfahren ist das Stoffschlussmittel als Lot oder Lötschicht ausgebildet. Im Falle eines Schweißverfahrens kann das Stoffschlussmittel beispielsweise als ein Metallplättchen ausgebildet sein, dass lokal den Widerstand erhöht. Das Leiterplattenelement ist mit einer Verbindungsstelle der Leiterplatte elektrisch mit dieser verbunden. Das Leiterplattenverbindungselement kann direkt mit der Leiterplatte, beispielsweise mit einer Kontaktfläche der Leiterplatte, oder indirekt, beispielsweise über ein elektrisches Kontaktelement, mit der Leiterplatte verbunden sein.

Die Leiterplatte ist vorzugsweise als eine starre Leiterplatte mit einem organischen Substrat ausgebildet. Die Leiterplatte weist eine Oberseite und eine Unterseite auf, wobei die Unterseite den Akkuzellen zugewandt ist. Die Leiterplatte kann eine oder mehrere Aussparungen für die Zellverbinder aufweisen. Die Aussparung ist derart ausgebildet, das mittels der Aussparung ein Durchgang zwischen der Oberseite und der Unterseite gebildet wird. Die Aussparung kann am Rand der Leiterplatte oder innerhalb der Leiterplatte angeordnet sein. Die Aussparung kann somit eine geschlossene oder eine offene Kante aufweisen.

Die Verbindungsstelle kann für ein Schweißverfahren und/oder für ein Lötverfahren vorgesehen sein. Die Verbindungsstelle weist eine Kontaktfläche auf. Die Kontaktfläche kann auf einer Außenlage der Leiterplatte und/oder in der Aussparung der Leiterplatte angeordnet sein. Die Kontaktfläche ist insbesondere als eine Oberflächenmetallisierung, beispielsweise als ein Kupferpad, ausgebildet. Die Verbindungsschnittstelle ist vorzugsweise mit einer Leiterbahn der Leiterplatte verbunden. Die Verbindungsstelle kann ein Stoffschlussmittel, wie beispielsweise ein Lötpad oder ein Schweißplättchen, aufweisen.

Die thermisch unkontrollierbare Situation entsteht bei einem thermischen Durchgehen (engl. thermal runaway) der Akkuzellen, bei der eine Fehlfunktion oder eine Beschädigung einer Akkuzelle zu einem unkontrollierten Aufheizen der Ackuzelle auf mehrere hundert Grad Celsius führt, die wiederum auf benachbarte Akkuzellen innerhalb des Akkupacks übertragen wird. Die folgende Kettenreaktion kann zu einem Brand oder einer Explosion des Akkupacks führen.

Unter einer thermischen Isolierung benachbarter Akkuzellen soll im Zusammenhang dieser Anmeldung insbesondere verstanden werden, dass die Akkuzellen flammgeschützt in einem Gehäuseteil mit einer hohen Schmelztemperatur aufgenommen sind. Der Flammschutz soll dabei vorzugsweise zumindest der Norm UL 94 Klasse V0 entsprechen. Unter einer hohen Schmelztemperatur soll in diesem Zusammenhang insbesondere eine Schmelztemperatur von zumindest 200°, vorzugsweise zumindest 220°, bevorzugt zumindest 250°, bei einer Aufheizrate von 10 K/min verstanden werden.

Unter einer mechanischen Stabilisierung benachbarter Akkuzellen soll im Zusammenhang dieser Anmeldung insbesondere verstanden werden, dass die Akkuzellen derart im Gehäuse aufgenommen sind, dass im Falle einer Druckentlastung diese nicht auf benachbarte Akkuzellen gerichtet ist. Das Gehäuse, insbesondere der Zellenhalter, ist derart ausgebildet, dass die Druckentlastung nicht über die Mantelfläche der Akkuzelle, sondern bevorzugt stirnseitig im Bereich der Zellpole erfolgt. Das Gehäuse oder der Zellenhalter sind hierzu insbesondere aus einem glasfaserverstärkte Material ausgebildet. Vorzugsweise weist das Gehäuse, insbesondere der Zellenhalter, eine Festigkeit mit einem Zug-E-Modul in einem Bereich zwischen 8000 bis 13000 MPa, bevorzugt 10000 bis 12000 MPa auf.

Unter einem gezielten Auslass von Gas bzw. einer Druckentlastung der Ackuzelle bei einer thermisch unkontrollierbaren Situation soll insbesondere verstanden werden, dass im Falle eines Ausweichens von Gas aus der Akkuzelle die Entweichung des Gases aus der Akkuzelle und aus dem Gehäuse des Akkupacks an dafür vorgesehenen Stellen erfolgt und das Gas zwischen diesen Stellen teilweise oder vollständig geführt wird.

Des Weiteren wird vorgeschlagen, dass das Gehäuse einen Zellenhalter mit zumindest zwei Einzelzellenaufnahmen aufweist, wobei der Zellenhalter der ersten Schutzeinheit zugeordnet ist. Insbesondere sind die Einzelzellenaufnahmen derart ausgebildet, dass die Akkuzellen entlang ihrer Mantelfläche im Wesentlichen vollständig umschlossen sind. Vorteilhaft kann dadurch die Sicherheit der Ackuzellen weiter erhöht werden.

Weiterhin wird vorgeschlagen, dass die Einzelzellenaufnahmen zumindest teilweise aus einem thermisch widerstandsfähigen Material ausgebildet sind, wobei das thermisch widerstandsfähige Material flammgeschützt ausgebildet ist. Vorteilhaft kann dadurch die Sicherheit weiter erhöht werden.

Zudem wird vorgeschlagen, dass der Akkupack zumindest einen Zellverbinder zur elektrischen Verbindung der Akkuzellen aufweist, der der zweiten Schutzeinheit zugordnet ist. Insbesondere weist die zweite Schutzeinheit eine Schmelzsicherung auf, die zwischen elektrisch parallel miteinander verbundenen Akkuzellen angeordnet ist. Insbesondere ist die Schmelzsicherung derart ausgebildet ist, dass die Schmelzsicherung in einem Zeitbereich von unter 10 s, insbesondere unter 5 s, vorzugsweise unter 1 s, auslöst. Die Schmelzsicherung ist zur elektrischen Trennung von miteinander verbundenen Akkuzellen bei einer thermisch unkontrollierbaren Situation ausgebildet. Vorteilhaft kann dadurch ein Kurzschluss benachbarter Akkuzellen vermieden werden. Die Schmelzsicherung kann einstückig mit dem Zellenverbindungselement oder mit dem Leiterplattenverbindungselement ausgebildet sein.

Des Weiteren wird vorgeschlagen, dass der Akkupack zumindest einen Gaskanal aufweist, der der dritten Schutzeinheit zugeordnet ist. Insbesondere weist der Ackupack je Akkuzelle einen Gaskanal auf, wobei die Gaskanäle zumindest teilweise voneinander getrennt ausgebildet sind. Die Gaskanäle weisen zumindest einen Einlass und zumindest einen Auslass bzw. Gasauslass auf. Der Einlass ist im Bereich der jeweiligen Akkuzellen angeordnet. Der Auslass ist im Bereich des Gehäuses, insbesondere im Bereich eines Außengehäuseteils oder zwischen zwei Außengehäuseteilen, angeordnet. Vorzugsweise sind die Gaskanäle im Bereich der Einlässe getrennt voneinander ausgebildet und werden in Richtung des Auslass zusammengeführt.

Weiterhin wird vorgeschlagen, dass der Akkupack einen Gasauslass aufweist, über den bei einer thermisch unkontrollierbaren Situation ein aus der Akkuzelle austretendes Gas aus dem Gehäuse austreten kann. Der Akkupack kann einen einzelnen Gasauslass oder mehrere Gasauslässe aufweisen.

Zudem wird vorgeschlagen, dass der Gasauslass ein elastisches Dichtelement aufweist, das derart elastisch ausgebildet ist, dass das Dichtelement abhängig vom Gasdruck innerhalb des Gehäuses relativ zu dem Gehäuse beweglich ausgebildet ist. Vorteilhaft wird dadurch erst ab einem bestimmten Gasdruck der Gasauslass aktiviert und Gas kann entweichen. Das Dichtelement ist insbesondere aus einem elastischen Kunststoff, vorzugsweise einem Gummi, ausgebildet. Das Dichtelement ist insbesondere zwischen zwei Außengehäuseteilen des Ackupacks angeordnet. Der Gasauslass kann reversibel bzw. schließbar oder irreversibel ausgebildet sein.

Des Weiteren wird vorgeschlagen, dass der Gasauslass als eine Sollbruchstelle des Gehäuses ausgebildet ist, die derart ausgebildet ist, dass bei Überschreiten eines Gasdrucks innerhalb des Gehäuses eine Öffnung im Gehäuse entsteht. Vorteilhaft wird dadurch erst ab einem bestimmten Gasdruck der Gasauslass aktiviert und Gas kann entweichen. Der Gasauslass ist somit irreversibel ausgebildet.

Zudem wird vorgeschlagen, dass der Gasauslass derart ausgebildet ist, dass eine Bewegung oder ein Aufbrechen des Gasauslasses in einem Druckbereich zwischen 1 Bar und 5 Bar, insbesondere zwischen 1,3 Bar und 3 Bar, vorzugsweise zwischen 1,5 Bar und 2,5 Bar, erfolgt. Vorteilhaft wird durch Wahl dieser Bereich zu frühes oder ein zu spätes Auslösen vermieden.

Des Weiteren wird vorgeschlagen, dass der Akkupack zwei Zellenhalter aufweist, wobei zwischen den Zellenhaltern eine Trennwand angeordnet ist, wobei die Trennwand der ersten Schutzeinheit und der dritten Schutzeinheit zugeordnet ist. Vorteilhaft kann dadurch der Schutz weiter verbessert werden. Die Trennwand ist vorzugsweise zumindest teilweise aus dem gleichen Material wie der Zellenhalter ausgebildet. Die Trennwand ist zumindest teilweise aus einem thermisch widerstandsfähigen Material ausgebildet. Die Trennwand ist insbesondere zur Trennung von zumindest zwei Gaspfaden eines Zellenhalters und/oder zur Trennung von zumindest zwei Gaspfaden benachbarter Zellenhalter ausgebildet.

Die Erfindung betrifft ferner insbesondere einen Akkupack mit einem Gehäuse, mit zumindest zwei Akkuzellen, wobei die Akkuzellen in dem Gehäuse aufgenommen sind, mit einem Zellverbinder, wobei der Zellverbinder zur elektrischen Verbindung der Akkuzellen ausgebildet ist, und mit einer Leiterplatte, wobei der Zellverbinder ein Zellenverbindungselement zur elektrischen Verbindung der Ackuzellen und ein Leiterplattenverbindungselement zur elektrischen Verbindung mit der Leiterplatte aufweist. Es wird vorgeschlagen, dass das Leiterplattenverbindungselement mit der Leiterplatte über einen Einpressbereich verbunden ist. Vorteilhaft kann dadurch eine robuste Verbindung der Leiterplatte mit den Zellverbindern realisiert werden.

Die Leiterplatte kann einen oder mehrere Einpressbereiche aufweisen. Unter einem Einpressbereich soll ein Bereich verstanden werden, in welchem mittels einer Einpresstechnik der Zellverbinder mit der Leiterplatte verbunden. Der Einpressbereich kann beispielsweise als eine Einpressöffnung, eine Einpressbohrung oder als ein Einpressloch ausgebildet sein. Der Einpressbereich umfasst vorzugsweise eine metallisierte Aussparung bzw. ein metallisiertes Loch in der Leiterplatte.

Weiterhin wird vorgeschlagen, dass das Leiterplattenverbindungselement als ein Einpresskontakt ausgebildet ist. Vorzugsweise weist das Leiterplattenverbindungselement eine Einpresszone zur Verbindung mit der Leiterplatte im Einpressbereich auf. Der Einpresskontakt kann beispielsweise als ein Anschlussstift ausgebildet sein. Der Einpresskontakt kann einen Hohlraum aufweisen, der durch das Einpressen verformbar ist bzw. verformt wird. Der Einpresskontakt kann derart verformbar ausgebildet sein, dass der Einpresskontakt mit der Leiterplatte eine formschlüssige Verbindung schließt. Alternativ oder zusätzlich ist auch denkbar, dass die Materialien des Einpresskontakts und der Metallisierungen der Leiterplatte derart ausgewählt sind, dass ein Stoffschluss mittels eines Kaltschweißprozesses durch das Einpressen erfolgt. Der Einpresskontakt ist vorzugsweise radial elastisch vorspannbar ausgebildet. Der Einpresskontakt ist insbesondere nadelöhrartig ausgebildet. Unter nadelöhrartig soll in diesem Zusammenhang sowohl ein Einpresskontakt mit einer nadelöhrförmigen Durchlassöffnung als auch mit einer nadelöhrförmigen Materialreduzierung verstanden werden.

Zudem wird vorgeschlagen, dass der Zellverbinder eine Zellverbinderschiene aufweist, wobei das Leiterplattenverbindungselement und das Zellenverbindungselement stoffschlüssig mit der Zellverbinderschiene verbunden ausgebildet sind. Die Zellverbinderschiene ist vorzugsweise aus dem gleichen Material wie das Zellenverbindungselement und aus einem sich von dem Leiterplattenverbindungselement unterscheidenden Material ausgebildet. Die Zellverbinderschiene weist insbesondere einen größeren Querschnitt als das Zellenverbindungselement auf. Die Zellverbinderschiene kann sich geradlinig und/oder gebogen erstrecken. Vorzugsweise erstreckt sich die Zellverbinderschiene zwischen den Zellenverbindungselementen im Wesentlichen geradlinig. Insbesondere ist das Material der Zellverbinderschiene derart gewählt, dass die Wärme von dem Leiterplattenverbindungselement auf die Zellverbinderschiene übertragen und somit das Leiterplattenverbindungselement gekühlt wird.

Des Weiteren wird vorgeschlagen, dass sich der Einpresskontakt im Wesentlichen koaxial oder parallel zu der Zellverbinderschiene erstreckt. Vorteilhaft kann dadurch ein kompakter Akkupack ausgebildet werden.

Weiterhin wird vorgeschlagen, dass das Zellenverbindungselement als ein Drahtelement zum Drahtbonden ausgebildet ist. Vorteilhaft kann dadurch eine Kontaktierung der Akkuzellen über ein Schweißverfahren realisiert werden.

Zudem wird vorgeschlagen, dass die Zellverbinderschiene mit einem einzigen Leiterplattenverbindungselement und mit mehreren Zellenverbindungselementen verbunden ist. Vorteilhaft kann dadurch ein einfacher und kostengünstiger Aufbau des Akkupacks realisiert werden.

Des Weiteren wird vorgeschlagen, dass der Akkupack einen Zellenhalter aufweist, wobei die Akkuzellen in dem Zellenhalter aufgenommen sind, wobei die Zellverbinderschiene von dem Zellenhalter umspritzt ausgebildet ist. Der Zellenhalter und der Zellverbinder bilden somit vorteilhaft ein 2K-Spritzgussteil.

Weiterhin wird vorgeschlagen, dass der Zellenhalter Schutzwände zum Schutz der Zellenverbindungselemente aufweist. Vorteilhaft können dadurch die Zellenverbindungselemente wirksam vor mechanischer Beschädigung, insbesondere bei der Montage, geschützt werden. Die Schutzwände sind vorzugsweise einstückig mit dem Zellenhalter ausgebildet. Die Schutzwände sind vorzugsweise derart ausgebildet, dass sie sich in ihrer Höhe in eine von den Akkuzellen abgewandte Richtung und in ihrer Länge im Wesentlichen entlang der Zellenverbindungselemente erstrecken.

Zudem wird vorgeschlagen, dass der Akkupack zumindest einen ersten Zellverbinder zur Leistungsabgabe bzw. Leistungsversorgung und zumindest einen zweiten Zellverbinder zur Einzelzellenspannungsüberwachung aufweist. Der erste Zellverbinder und der zweite Zellverbinder sind dabei bevorzugt im Wesentlichen gleich ausgebildet.

Die Erfindung betrifft zudem ein Verfahren zur Herstellung eines Akkupacks, umfassend folgende Verfahrensschritte:
- stoffschlüssige Verbindung einer Zellverbinderschiene mit einem Leiterplattenverbindungselement, insbesondere mittels einer Walzplattierung;
- Stanzen der Zellverbinderschiene zur Anpassung des Zellverbinders auf eine Lagenzahl des Akkupacks;
- Umspritzen der Zellverbinderschiene zur Herstellung eines Zellenhalters;
- Aufnahme von zumindest zwei Akkuzellen in dem Zellenhalter;
- stoffschlüssige Verbindung der Zellverbinderschiene mit den Akkuzellen über Zellenverbindungselemente, insbesondere mittels eines Ultraschallschweißverfahrens.

Die Erfindung betrifft des Weiteren ein System aufweisend einen ersten Akkupack und einen zweiten Akkupack, wobei der zweite Akkupack eine größere Lagenzahl als der erste Akkupack aufweist, wobei der erste Akkupack eine erste Zellverbinderschiene und der zweite Akkupack eine zweite Zellverbinderschiene aufweist. Es wird vorgeschlagen, dass die zweite Zellverbinderschiene derart ausgebildet ist, dass die erste Zellverbinderschiene durch ein Kürzen der zweiten Zellverbinderschiene herstellbar ist. Vorteilhaft wird dadurch ein flexibel in unterschiedlichen Akkupacks einsetzbarer Zellverbinder bereitgestellt. Der erste Akkupack und der zweite Akkupack weisen insbesondere eine andere Größe und/oder Kapazität auf. Der erste Akkupack kann beispielsweise als ein zweilagiger Akkupack und der zweite Akkupack kann beispielsweise als ein dreilagiger Akkupack ausgebildet sein. Unter einem dreilagigen Akkupack soll dabei insbesondere verstanden werden, dass die Akkuzellen in drei Lagen angeordnet sind, wobei innerhalb einer Lage die Akkuzellen nebeneinander und/oder hintereinander im Wesentlichen auf einer Ebene angeordnet sind und innerhalb einer Lage die Anzahl der Akkuzellen die Lagenanzahl nicht unterschreitet.

Die Erfindung betrifft ferner insbesondere ein Akkupack mit einem Gehäuse, mit zumindest einer Akkuzelle, wobei die Akkuzelle in dem Gehäuse angeordnet ist, wobei das Gehäuse ein erstes Gehäuseteil und ein zweites Gehäuseteil aufweist. Es wird vorgeschlagen, dass das erste Gehäuseteil und das zweite Gehäuseteil stoffschlüssig mittels eines Kunststoffschweißverfahrens oder eines Laserdurchstrahlschweißverfahrens miteinander verbunden sind. Vorteilhaft kann dadurch ein wasser- und staubdichtes Gehäuse für den Akkupack bereitgestellt werden.

Unter einem Kunststoffschweißverfahren soll dabei ein Verfahren verstanden werden, bei dem mittels Erwärmung bzw. Erhitzung zwei Kunststoffteile miteinander stoffschlüssig verbunden werden. Das Kunststoffschweißverfahren kann beispielsweise als ein Laserdurchstrahlschweißverfahren, als ein Ultraschallschweißverfahren oder als ein Heizelementschweißverfahren ausgebildet sein. Das Kunststoffschweißverfahren oder das Laserdurchstrahlschweißverfahren ist insbesondere als ein einstufiger Prozess ausgebildet, bei dem die Erwärmung des Kunststoffs und der Fügevorgang im Wesentlichen zeitgleich erfolgen.

Des Weiteren wird vorgeschlagen, dass das erste Gehäuseteil eine Fügefläche, die in Kontakt mit einer korrespondierenden Fügefläche des zweiten Gehäuseteils steht, und eine Bestrahlungsfläche, die zur Bestrahlung durch eine Laservorrichtung vorgesehen ist, aufweist. Die Bestrahlungsfläche ist als eine Außenfläche des Gehäuses ausgebildet, über die der Laserstrahl in das Gehäuse eintritt. Das erste Gehäuseteil ist vorzugsweise als Laserstrahleitelement ausgebildet, dass den Laserstrahl zu der Fügefläche des zweiten Gehäuseteils leitet. Die Fügefläche und die Bestrahlungsfläche sind auf angrenzenden oder gegenüberliegenden Seiten des ersten Gehäuseteils angeordnet. Die Fügefläche ist vorzugsweise im Wesentlichen eben ausgebildet. Die Bestrahlungsfläche kann im Wesentlichen eben oder abgerundet oder gekrümmt ausgebildet sein. Die Bestrahlungsfläche ist insbesondere einer Außenfläche des Gehäuses des Akkupacks zugeordnet bzw. bildet diese teilweise.

Weiterhin wird vorgeschlagen, dass die Fügefläche und die Bestrahlungsfläche schräg zueinander angeordnet sind. Vorteilhaft kann dadurch ein besonders ergonomisches Gehäuse des Akkupacks realisiert werden. Insbesondere sind die Fügefläche und die Bestrahlungsfläche in einem Winkelbereich zwischen 30° und 70°, vorzugsweise zwischen 40° und 60°, zueinander angeordnet. Die Fügfläche und die Bestrahlungsfläche sind insbesondere größtenteils oder vollständig schräg zueinander angeordnet. Unter größtenteils soll dabei ein Bereich von zumindest 50% der Bestrahlungsfläche, vorzugsweise ein Bereich von zumindest 75% der Bestrahlungsfläche, bevorzugt ein Bereich von zumindest 90% der Bestrahlungsfläche, verstanden werden. Teilweise können die Flächen auch parallel bzw. mit einem Winkel von im Wesentlichen 0° zueinander verlaufen.

Zudem wird vorgeschlagen, dass das erste Gehäuseteil und/oder das zweite Gehäuseteil im Bereich der Fügeflächen eine Wandstärkenreduzierung aufweist. Im Bereich der Wandstärkenreduzierung ist die Wandstärke im Vergleich zu einem Maximalwert oder einem Durchschnittswert der Wandstärke des jeweiligen Gehäuseteils um zumindest 10%, vorzugsweise um zumindest 25%, bevorzugt um zumindest 50%, reduziert. Insbesondere ist die Wandstärkenreduzierung als eine Sollbruchstelle ausgebildet, die als ein Gasauslass bei einer thermisch unkontrollierbaren Situation ausgebildet ist. Vorteilhaft kann dadurch die Sicherheit des Akkupacks erhöht werden.

Des Weiteren wird vorgeschlagen, dass die Bestrahlungsfläche umlaufend, insbesondere umlaufend und durchgehend, ausgebildet ist. Vorteilhaft kann dadurch eine sichere und insbesondere dichte Verbindung der Gehäuseteile realisiert werden.

Weiterhin wird vorgeschlagen, dass die Bestrahlungsfläche bezogen auf einen Fixpunkt, der zur Positionierung einer Laservorrichtung während des Laserdurchstrahlschweißverfahrens vorgesehen ist, derart ausgebildet ist, dass ein Lasereinstrahlwinkel β größtenteils oder vollständig in einem Winkelbereich zwischen 30° und 65° liegt. Vorteilhaft kann dadurch eine optimale Geometrie des Gehäuses realisiert werden. Unter größtenteils soll dabei ein Bereich von zumindest 50% der Bestrahlungsfläche, vorzugsweise ein Bereich von zumindest 75% der Bestrahlungsfläche, bevorzugt ein Bereich von zumindest 90% der Bestrahlungsfläche, verstanden werden.

Zudem wird vorgeschlagen, dass das erste Gehäuseteil und das zweite Gehäuseteil in einem Bereich außerhalb der Fügefläche zusätzlich über einen Kraft- und/oder Formschluss miteinander verbunden sind. Vorteilhaft kann dadurch die Verbindung der Gehäuseteile optimiert werden. Die zusätzliche Verbindung kann beispielsweise als eine Rastverbindung ausgebildet sein. Insbesondere weist das Gehäuse einen dichten Innenbereich und einen nicht dichten Innenbereich auf, wobei der dichte Bereich von der umlaufenden Fügefläche begrenzt wird.

Die Erfindung betrifft des Weiteren insbesondere ein Herstellungsverfahren zur Herstellung eines Akkupacks wie zuvor beschrieben. Während des Herstellungsverfahrens ist die Laservorrichtung zur Durchführung des Laserdurchstrahlverfahrens derart positioniert, dass der im Bereich des Fixpunkts austritt bzw. an diesem abgelenkt wird, beispielsweise mittels einer Optik.

Weiterhin wird vorgeschlagen, dass während des Laserdurchstrahlschweißverfahrens der Akkupack und die Laservorrichtung keine Relativbewegung zueinander durchführen.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
Fig. 1 eine schematische Ansicht eines Elektrofahrrads mit einem erfindungsgemäßen Akkupack;
Fig. 2 eine perspektivische Ansicht des Akkupacks;
Fig. 3 eine perspektivische Ansicht des Akkupacks ohne Gehäuse;
Fig. 4 ein Querschnitt durch den Akkupack;
Fig. 5 eine Teilseitenansicht des Akkupacks ohne Gehäuse;
Fig. 6 eine Teilseitenansicht einer alternativen Ausführungsform eines Akkupacks ohne Gehäuse;
Fig. 7 eine Teilseitenansicht einer weiteren alternativen Ausführungsform eines Akkupacks ohne Gehäuse;
Fig. 8 eine perspektivische Ansicht eines Zellverbinders des Akkupacks gemäß Fig. 5;
Fig. 9 eine schematische Ansicht des Akkupacks gemäß Fig. 2 während eines Laserdurchstrahlschweißverfahrens;
Fig. 10 einen Schnitt durch einen ersten Verbindungsbereich des Akkupacks;
Fig. 11 einen Schnitt durch einen zweiten Verbindungsbereich des Akkupacks;
Fig. 12 einen Schnitt durch einen dritten Verbindungsbereich des Akkupacks;
Fig. 13 einen Längsschnitt einer alternativen Ausführungsform eines Akkupacks mit einer alternativen Ausführungsform einer Schutzvorrichtung;
Fig. 14 eine Teildraufsicht auf einen Zellenhalter mit eingesetzten Akkuzellen des Akkupacks gemäß Fig. 13;
Fig. 15 eine Draufsicht auf eine Trennwand des Akkupacks gemäß Fig. 13;
Fig. 16 einen vergrößerten Teilschnitt des Akkupacks gemäß Fig. 13.

### Beschreibung der Ausführungsbeispiele

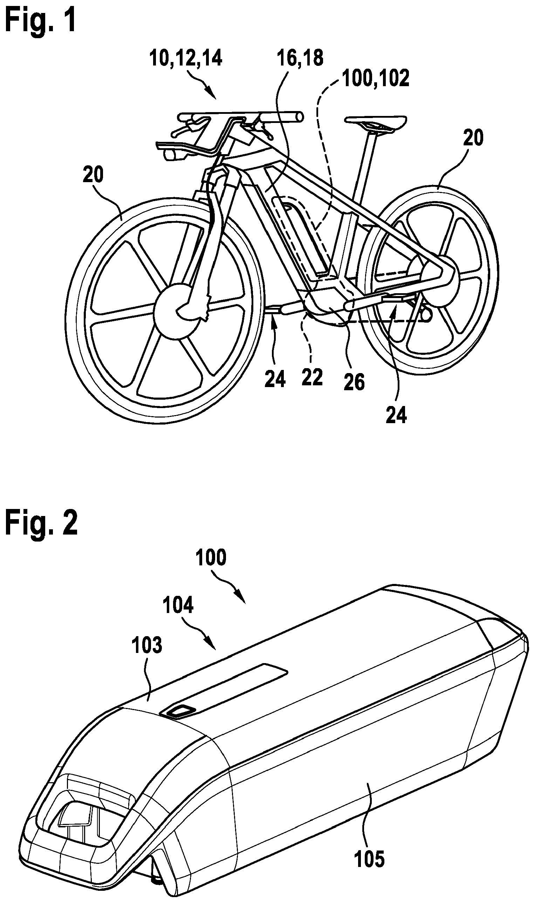

In Fig. 1 ist ein Verbraucher 10 mit einem erfindungsgemäßen Akkupack 100 in einer schematischen Seitenansicht gezeigt. Der Verbraucher 10 ist beispielhaft als ein elektrisch angetriebenes Fortbewegungsmittel 12, insbesondere als ein Elektrofahrrad 14, ausgebildet. Das Elektrofahrrad 14 kann beispielsweise als ein Pedelec oder als ein E-Bike ausgebildet sein.

Das Elektrofahrrad 14 weist ein Gehäuse 16 in Form eines Rahmens 18 bzw. eines Fahrradrahmens auf. Mit dem Rahmen 18 sind zwei Räder 20 verbunden. Zudem weist der Verbraucher 10 eine Antriebseinheit 22 auf, die einen Elektromotor bzw. Hilfsmotor umfasst. Der Elektromotor ist vorzugsweise als ein Permanentmagnet-erregter, bürstenloser Gleichstrommotor ausgebildet. Der Elektromotor ist beispielhaft als ein Mittelmotor ausgebildet, wobei auch ein Nabenmotor oder dergleichen denkbar ist.

Die Antriebseinheit 22 umfasst eine Steuereinheit (nicht dargestellt), die zur Steuerung oder Regelung des Elektrofahrrads 14, insbesondere des Elektromotors, ausgebildet ist. Das Elektrofahrrad 14 weist eine Tretkurbel 24 auf. Die Tretkurbel 24 weist eine Tretkurbelwelle (nicht dargestellt) auf.

Die Steuereinheit und die Antriebseinheit 22 mit dem Elektromotor und der Tretkurbelwelle sind in einem mit dem Rahmen 18 verbundenen Antriebsgehäuse 26 angeordnet. Die Antriebsbewegung des Elektromotors wird vorzugsweise über ein Getriebe (nicht dargestellt) auf die Tretkurbelwelle übertragen, wobei die Größe der Unterstützung durch die Antriebseinheit 22 mittels der Steuereinheit gesteuert oder geregelt wird.

Der Verbraucher 10 ist mit dem Akkupack 100 elektrisch und mechanisch verbunden, der zur Energieversorgung der Antriebseinheit 22 ausgebildet ist. Der Akkupack 100 ist als ein Wechselakkupack 102 ausgebildet. Der Rahmen 18 weist eine Akkuschnittstelle auf, über die der Akkupack 100 auf dem Rahmen 18 befestigbar ist. Alternativ ist beispielsweise auch denkbar, dass der Akkupack 100 teilweise oder vollständig im Rahmen 18 aufgenommen wird oder in den Rahmen 18 fest integriert ist.

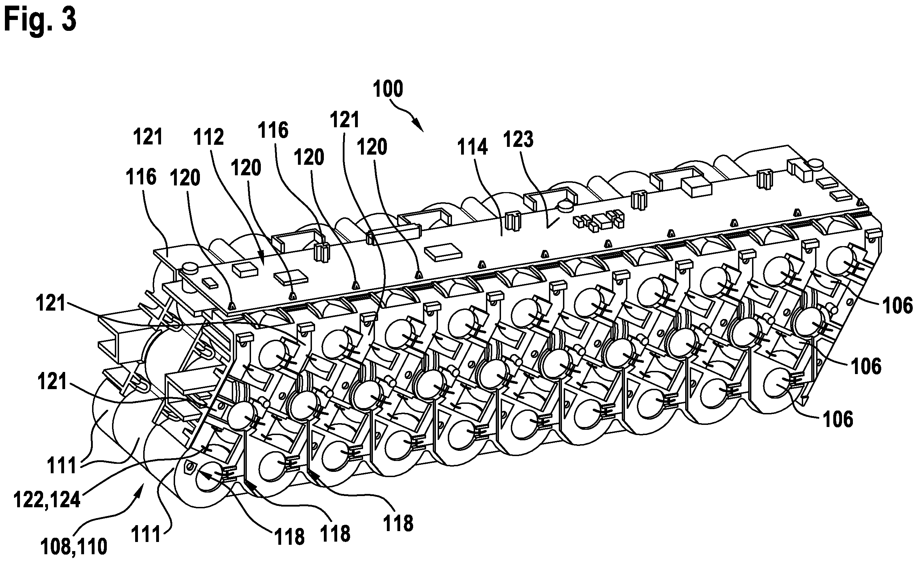

Der Akkupack 100 ist in Fig. 2 in einer perspektivischen Ansicht mit dem Gehäuse 104 und in Fig. 3 ohne das Gehäuse 104 bzw. die Außengehäuseteile des Gehäuses 104 gezeigt. Das Gehäuse 104 schließt den Akkupack 100 nach außen ab und ist aus einem Kunststoff ausgebildet. Das Gehäuse 104 weist beispielhaft zwei Außengehäuseteile auf, ein erstes Gehäuseteil 103 und ein zweites Gehäuseteil 105. Das erste Gehäuseteil 103 ist in dieser Ausführungsform im Wesentlichen deckelförmig ausgebildet und sitzt auf dem zweiten Gehäuseteil 105, das im Wesentlichen topförmig ausgebildet ist, auf.

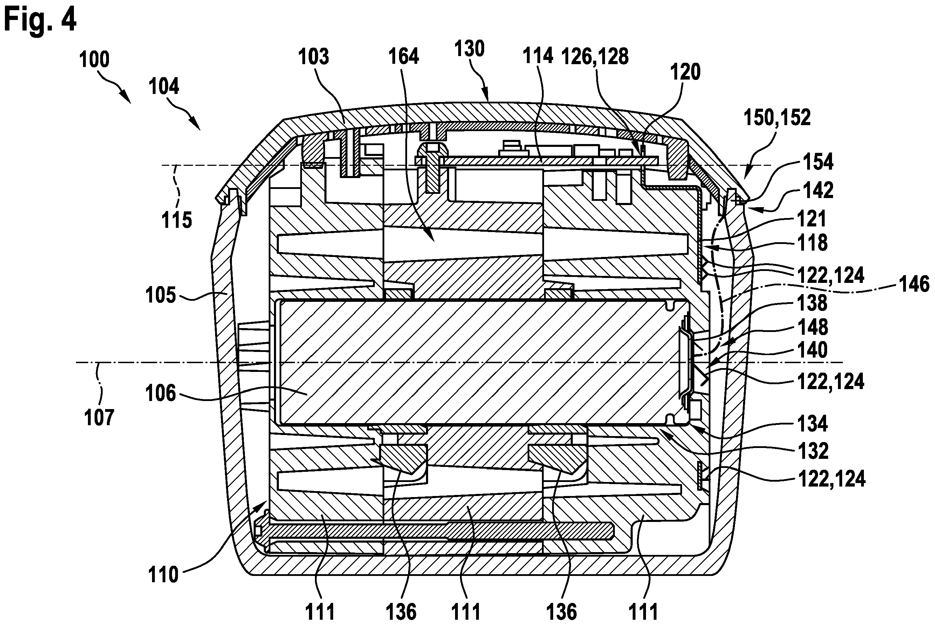

Der Akkupack 100 weist beispielhaft 30 Akkuzellen 106 (siehe Fig. 3) auf, die im inneren des Gehäuses 104 angeordnet sind. Dabei ist der Akkupack 100 dreilagig mit jeweils zehn Akkuzellen 106 je Lage ausgebildet. Das Gehäuse 104 weist zudem innenliegende Gehäuseteile 108 in Form von Zellenhaltern 110 auf. Die Zellenhalter 110 sind dazu ausgebildet, die Akkuzellen 106 aufzunehmen. Der Akkupack 100 weist beispielhaft einen einzigen Zellenhalter 110 auf, in welchem sämtliche Akkuzellen 106 angeordnet sind. Der Zellenhalter 110 ist beispielhaft mehrteilig aus einem Kunststoff ausgebildet. Es ist allerdings ebenso denkbar, dass die Zellenhalter 110 einteilig oder einstückig ausgebildet sind. Beispielhaft weist der Zellenhalter drei Komponente 111 auf die jeweils zur teilweisen Aufnahme sämtlicher Akkuzellen 106 ausgebildet sind. Die drei Komponente 111 sind aus einem Hartplastik-Kunststoff ausgebildet Die Komponenten 111 sind beispielhaft über ein Schraubverbindung miteinander verbunden (siehe Fig. 4). Es ist alternativ auch denkbar, dass die Komponenten 111 untereinander kraft- und/oder formschlüssig verbunden sind.

Die Akkuzellen 106 sind als zylindrische Rundzellen ausgebildet. Die Akkuzellen 106 sind im Wesentlichen vollständig in den Zellenhaltern 110 angeordnet. Der Zellenhalter 110 umschließt die Akkuzellen 106 entlang ihrer Mantelflächen dabei im Wesentlichen vollständig. Die Akkuzellen 106 weisen eine Mittelachse 107 (siehe Fig. 4) auf, die einer mittigen Längsachse der Akkuzellen 106 entspricht. Innerhalb eines Zellenhalters 110 sind die Akkuzellen 106 nebeneinander angeordnet, sodass die Mittelachsen 107 der Akkuzellen 106 parallel zueinander angeordnet sind.

Der Akkupack 100 weist eine Elektronik 112 auf, die zur Steuerung oder Regelung des Akkupacks 100 und/oder des Verbrauchers 10 und/oder einer nicht gezeigten Ladevorrichtung ausgebildet ist. Die Elektronik 112 umfasst beispielhaft ein BMS zur Überwachung des Akkupacks 100.

Die Elektronik 112 umfasst eine Leiterplatte 114, die beispielhaft als eine ebene und starre Leiterplatte 114 ausgebildet ist. Die Leiterplatte 114 ist auf dem Zellenhalter 110 angeordnet und sitzt auf dem Zellenhalter 110. Die Leiterplatte 114 weist eine Länge auf, die im Wesentlichen einer Länge der Zellenhalter 110 entspricht.

Der Zellenhalter 110 und die Leiterplatte 114 weisen Verbindungselemente 116 zur kraft- und/oder formschlüssigen Verbindung auf. Die Leiterplatte 114 spannt eine Leiterplattenebene 115 auf. Die Leiterplatte 114 bzw. die Leiterplattenebene 115 (siehe Fig. 4) erstreckt sich parallel zu den Akkuzellen 106 bzw. den Mittelachsen 107 der Akkuzellen 106.

Der Akkupack 100 weist zudem Zellverbinder 118 auf, die zur elektrischen Verbindung der Akkuzellen 106 mit der Elektronik 112 ausgebildet sind. Die Zellverbinder 118 sind zur Leistungsversorgung und/oder zur Überwachung der Einzelzellenspannung ausgebildet. Beispielhaft sind die beiden äußeren Zellverbinder 118 zur Leistungsversorgung bzw. Leistungsabgabe und die inneren Zellverbinder zur Einzelzellenspannungsüberwachung ausgebildet. Die Zellverbinder 118 bestehen aus einem metallischen Werkstoff. In der gezeigten Ausführungsform sind alle Zellverbinder 118 direkt mit der Leiterplatte 114 verbunden. Alternativ wäre auch denkbar, dass einzelne Zellverbinder 118, beispielsweise die Zellverbinder zur Leistungsversorgung, direkt mit elektrischen Kontaktelementen (nicht dargestellt) des Akkupacks 100 verbunden sind.

Die Zellverbinder 118 sind beispielhaft einteilig ausgebildet. Die Zellverbinder 118 weisen ein Leiterplattenverbindungselement 120 zur Verbindung mit der Leiterplatte 114 und ein Zellenverbindungselement 122 (siehe Fig. 3) zur Verbindung mit den Akkuzellen 106 auf. Das Leiterplattenverbindungselement 120 und das Zellenverbindungselement 122 sind über eine Zellverbinderschiene 121 miteinander verbunden. Das Leiterplattenverbindungselement 120 und das Zellenverbindungselement 122 sind dabei stoffschlüssig mit der Zellverbinderschiene 121 verbunden.

Die Leiterplatte 114 weist eine Oberseite 123, die den Akkuzellen 106 abgewandt ist, und eine Unterseite, die den Akkuzellen 106 zugewandt ist, auf. Die Zellverbinder 118 sind über Einpressbereiche 126 mit der Leiterplatte 114 elektrisch verbunden. Die Einpressbereiche 126 sind dabei als Aussparungen 128 ausgebildet, die eine metallisierte Innenfläche, beispielsweise aus Kupfer, aufweisen.

Die Akkuzellen 106 sind in der gleichen Orientierung im Zellenhalter 110 aufgenommen, sodass die stirnseitige Kontaktierung der Akkuzellen 106 mittels der Zellverbinder 118 nur über eine einzige Seite erfolgen kann. Somit sind alle Zellverbinder 118 auf einer Seite des Akkupacks 100 angeordnet.

In Fig. 4 ist ein Querschnitt durch den Akkupack 100 gezeigt. Der Akkupack 100 weist eine Schutzvorrichtung 130 auf, die zum Schutz des Akkupacks 100 bei einer thermisch unkontrollierbaren Situation ausgebildet ist.

Die Schutzvorrichtung 130 weist eine erste Schutzeinheit 132 zur thermischen Isolierung und mechanischen Stabilisierung von benachbarten Akkuzellen 106 auf. Die erste Schutzeinheit 132 wird im Wesentlichen durch den Zellenhalter 110 ausgebildet, der die Akkuzellen 106 entlang ihrer Mantelflächen im Wesentlichen vollständig umschließt. Zudem umschließt der Zellenhalter 110 die Akkuzellen auch die Stirnseiten mit einem Flächenanteil von zumindest 25%. Der Zellenhalter 110 weist je Akkuzelle 106 eine Einzelzellenaufnahme 134 auf.

Der Zellenhalter 110 weist neben den drei Komponenten 111 aus einer Hartplastik auch Toleranzausgleichelemente 136 auf, die beispielhaft aus einer Weichplastik ausgebildet sind. Die Toleranzausgleichselemente 136 sind dazu ausgebildet, die Akkuzellen 106 in der Einzelzellenaufnahme 134 zu verspannen. Hierzu sind die Toleranzausgleichselemente 136 derart ausgebildet, dass die Ackuzellen 106 in der Einzelzellenaufnahme 134 durch die Toleranzausgleichselemente 136 mit einer radial nach innen gerichteten Kraft beaufschlagt werden. Der Zellenhalter 110 ist derart ausgelegt, dass beispielhaft jeder Einzelzellenaufnahme 134 zwei Toleranzausgleichselemente 136 zugeordnet sind.

Der Zellenhalter 110, insbesondere die drei Komponenten 111 des Zellenhalters 110, bestehen aus einem mechanisch und thermisch widerstandsfähigen Material, insbesondere dem gleichen Material. Die Komponenten 111 bestehen beispielhaft aus einem PA6 GF 20 Material und sind glasfaserverstärkt und flammgeschützt. Der Flammschutz erfüllt dabei die Mindestanforderung der Norm UL94 Klasse V0. Zudem weist der Zellenhalter 110 eine Schmelztemperatur von höher als 200° und ein Elastizitätsmodul von ca. 10 Gpa auf.

Im Falle einer thermisch unkontrollierbaren Situation kann es zu einem Aufblähen und/oder Entzünden der Akkuzelle 106 in dem Zellenhalter 110 kommen. Durch die Schutzvorrichtung 130 soll dies möglichst verhindert werden und bei Eintreten sollen die benachbarten Akkuzellen geschützt werden.

Die Einzelzellenaufnahmen 134 sind durch das mechanisch widerstandsfähige Material derart stabil ausbildet, dass im Falle eines Aufblähens der Akkuzelle 106 kein Druck auf benachbarte Einzelzellenaufnahmen 134 bzw. benachbarte Ackuzellen 106 erfolgt. Insbesondere sind die Einzelzellenaufnahmen 134 derart mechanisch widerstandsfähig ausgebildet, dass das Gas im Bereich der Zellpole 138 der Akkuzellen 106 austritt.

Benachbarte Einzelzellenaufnahmen 134 weisen eine gemeinsame Wand auf, die auf einer Seite eine erste Einzelzellenaufnahme 134 und auf einer gegenüberliegenden zweiten Seite eine zweite Einzelzellenaufnahme 134 begrenzt. Die Wand weist eine Mindestwandstärke auf, die in einem Bereich zwischen 3% und 12%, vorzugsweise zwischen 3% und 6%, eines Durchmessers der Ackuzelle 106 liegt. Da neben der Größe der Akkuzellen 106 auch deren Energiegehalt eine wesentliche Rolle für die mechanischen Anforderungen spielt, ist die Wandstärke zudem derart gewählt, dass der Energiegehalt der Akkuzellen im Verhältnis zu der Mindestwandstärke der Wand des Zellenhalters 110 bei zumindest 15 Wh/mm liegt.

Die Schutzvorrichtung 130 weist zudem eine zweite Schutzeinheit 140 auf, die zur elektrischen Trennung von Akkuzellen 106 bei einer thermisch unkontrollierbaren Situation ausgebildet sind.

Die zweite Schutzeinheit 140 wird durch das Zellenverbindungselement 122 gebildet. Das Zellenverbindungselement 122 ist aus einem Drahtelement 124 ausgebildet, das über Drahtbonden mit der Zellverbinderschiene 121 verbunden ist. Jede Akkuzelle 106 ist dabei mit zwei Zellenverbindungselemente 122 stoffschlüssig verbunden. Die Verbindung kann beispielsweise über ein Ultraschallschweißverfahren erfolgen. Die Zellenverbindungselemente 122, insbesondere die Drahtelemente 124, sind derart dünn ausgebildet, dass sie bei einer gewissen Temperatur schmelzen und somit der elektrische Kontakt zu der Zellverbinderschiene 121 und den damit verbundenen Akkuzellen 106 getrennt wird. Vorteilhaft wird dadurch bei eine zu großen Wärmeentwicklung ein Kurzschluss und eine Kettenreaktion in den benachbarten Akkuzellen 106 wirksam verhindert. Die Drahtelemente 124 wirken somit als Schmelzsicherung der Akkuzellen 106. Die Schmelzsicherung ist insbesondere derart ausgebildet, dass im Falle einer thermisch unkontrollierbaren Situation die elektrische Trennung innerhalb von 5 s erfolgt.

Des Weiteren weist die Schutzvorrichtung 130 eine dritte Schutzeinheit 142 zu einem gezielten Auslass von Gas bei einer thermisch unkontrollierbaren Situation auf. Die dritte Schutzeinheit 142 weist mehrere Gaskanäle 146 zum Transport des Gases aus den Akkuzellen 106 bei einer Beschädigung nach außen auf. Die Gaskanäle 146 weisen dabei einen Einlass 148 und einen Gasauslass 150 auf.

Über den Einlass 148 wird das Gas aus den Akkuzellen 106 in dem Gaskanal 146 aufgenommen. Der Akkupack 100, insbesondere der Zellenhalter 110, weist beispielhaft je Akkuzelle 106 einen Einlass 148 auf, sodass die Gaskanäle 146 im Bereich des Einlass 148 getrennt voneinander ausgebildet sind. Der Einlass 148 ist dabei unmittelbar im Bereich der Zellpole 138 der Akkuzellen 106 angeordnet, um ausströmendes Gas direkt aufzunehmen.

Das ausströmende Gas wird im Gaskanal 146 zu dem Gasauslass 150 geführt. Der Gasauslass 150 ist derart ausgebildet, dass der Gasauslass geschlossen ist und bei Eintreten einer thermisch unkontrollierbaren Situation selbsttätig geöffnet wird. Der Gasauslass 150 ist beispielhaft als eine Sollbruchstelle 152 im Gehäuse 104 des Akkupacks 100 ausgebildet. Das erste Gehäuseteil 103 und das zweite Gehäuseteil 105 sind über ein Laserdurchstrahlschweißverfahren miteinander verbunden. Im Bereich der Sollbruchstelle 152 weist das Gehäuse 104, insbesondere das zweite Gehäuseteil 105, eine Wandstärkenreduzierung 154 auf. Die Wandstärkenreduzierung 154 ist derart gewählt, dass die Sollbruchstelle bei einem Innendruck in einem Bereich zwischen 1 bar und 5 bar, beispielhaft bei ca. 2,3 bar, zu einer Öffnung im Gehäuse 104 führt, durch die das Gas austreten und der Druck sich schlagartig abbauen kann.

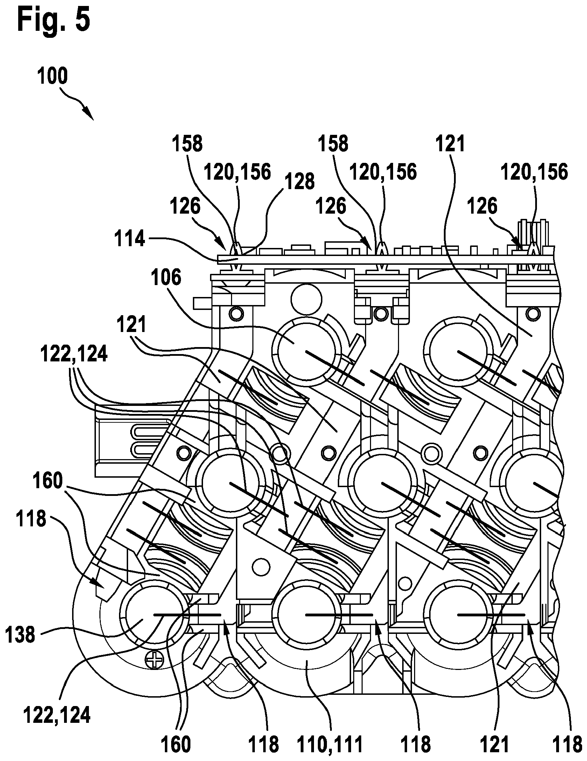

In Fig. 5 ist eine Seitenansicht des Akkupacks 100 ohne Gehäuse 104 gezeigt. Jeder Zellverbinder 118 weist ein einziges Leiterplattenverbindungselement 120 auf, das über die Einpressbereiche 126 mit der Leiterplatte 114 verbunden ist.

Das Leiterplattenverbindungselement 120 ist als ein Einpresskontakt 156 ausgebildet. Der Einpresskontakt 156 umfasst eine Einpresszone 157, die zur Verbindung mit dem Einpressbereich 126 verfombar ausgebildet ist bzw. beispielhaft plastisch verformt wird. Der Einpresskontakt 156 ist beispielhaft stiftförmig mit einer nadelöhrartigen Öffnung 158 ausgebildet.

Die Zellverbinder 118 werden über ein Einpressen mit der Leiterplatte 114, insbesondere in die metallisierten Aussparungen 128 der Leiterplatte 114, verbunden. Die Einpresskontakte 156 sind derart größer als die Aussparungen 128 der Leiterplatte 114 ausgebildet, dass beim Einpressen eine zumindest teilweise plastische Verformung der Einpresskontakte 156 erfolgt. Durch das Einpressen erfolgt ein Kaltschweißprozess, über den das Leiterplattenverbindungselement 120 stoffschlüssig mit der Leiterplatte 114, insbesondere mit der metallisierten Aussparung 128 der Leiterplatte 114, verbunden wird. Vorteilhaft entsteht dadurch eine gasdichte elektrische Verbindung zwischen dem Zellverbinder 118, insbesondere dem Einpresskontakt 156, und der Leiterplatte 114.

Die Einpressbereiche 126 sind von der Seite betrachtet derart positioniert, dass die Abstände zu den zwei am nächsten angeordneten Akkuzellen 106 im Wesentlichen gleich ist. Vorteilhaft kann dadurch eine kompakte Bauweise realisiert werden.

Über die Zellverbinderschiene 121 sind die Leiterplattenverbindungselemente 120 mit den Zellenverbindungselementen 122 elektrisch verbunden. Die Zellenverbindungselemente 122 in Form der Drahtelemente 124 sind an einem Ende mit einem Zellpol 138 der Akkuzelle 106 und an einem gegenüberliegenden Ende mit der Zellverbinderschiene 121 stoffschlüssig verbunden. Die Verbindung erfolgt dabei jeweils über ein Ultraschweißverfahren.

Die Zellverbinderschiene 121 ist von dem Zellenhalter 110, insbesondere einer der Komponenten 111 des Zellenhalters 110, umspritzt ausgebildet. Der Zellenhalter 110 weist Schutzwände 160 auf, die zum Schutz der Drahtelemente 124 ausgebildet sind. Die Schutzwände 160 sind einstückig mit dem Zellenhalter 110, insbesondere mit der Komponente 111 des Zellenhalters 110, die die Zellverbinderschiene 121 umgibt, ausgebildet. Die Schutzwände 160 erstrecken sich nach außen bzw. in eine von den Akkuzellen 106 abgewandte Richtung und zusätzlich im Wesentlichen parallel zu den Drahtelementen 124. Beispielhaft ist der Zellenhalter 110 derart ausgebildet, dass jedes Drahtelement 124 zwei benachbarte Schutzwände 160 aufweist.

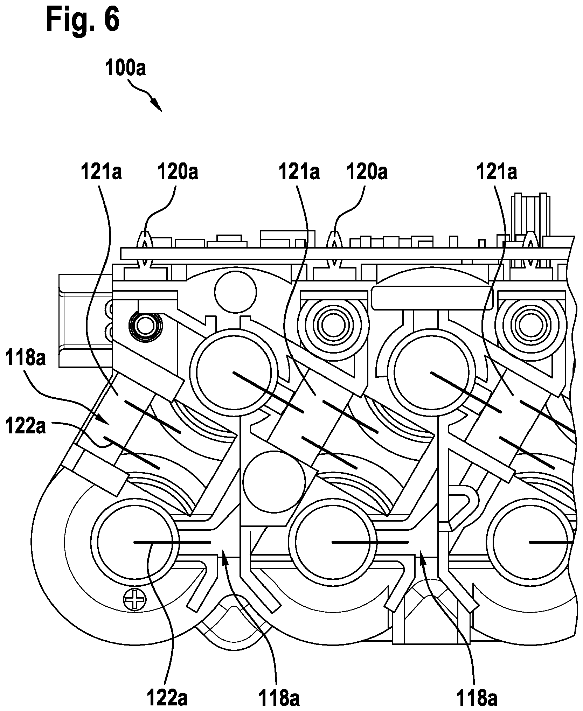

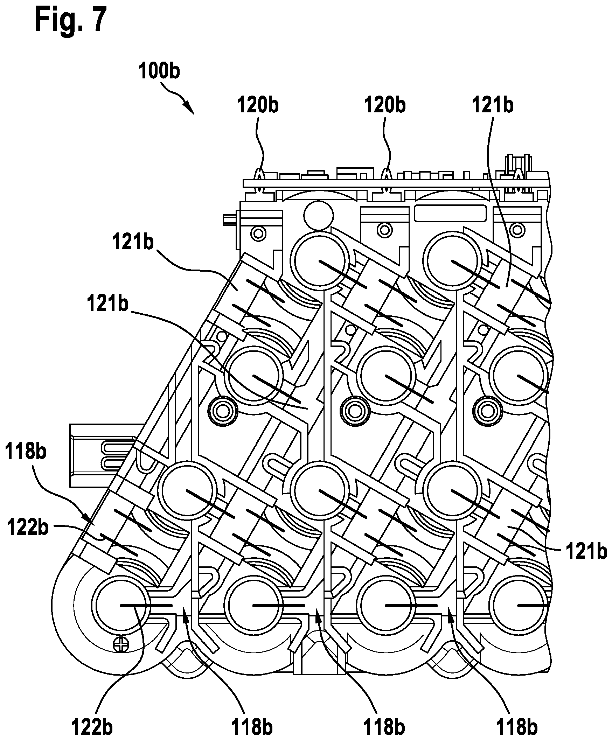

Der Akkupack 100 wird für unterschiedliche Kundenanforderungen in unterschiedlichen Konfigurationen hergestellt. In Fig.6 ist der Akkupack 100a mit einer zweilagigen Konfiguration und in Fig. 7 ist der Akkupack 100b in einer vierlagigen Konfiguration in einer Seitenansicht gezeigt. Die Zellverbinder 118, 118a, 118b sind dabei im Wesentlichen gleich ausgebildet, unterscheiden sich nur in der Länge der Zellverbinderschiene 121. Die Leiterplattenverbindungselemente 120, 120a, 120b und die Zellenverbindungselemente 122, 122a, 122b sind im Wesentlichen gleich ausgebildet.

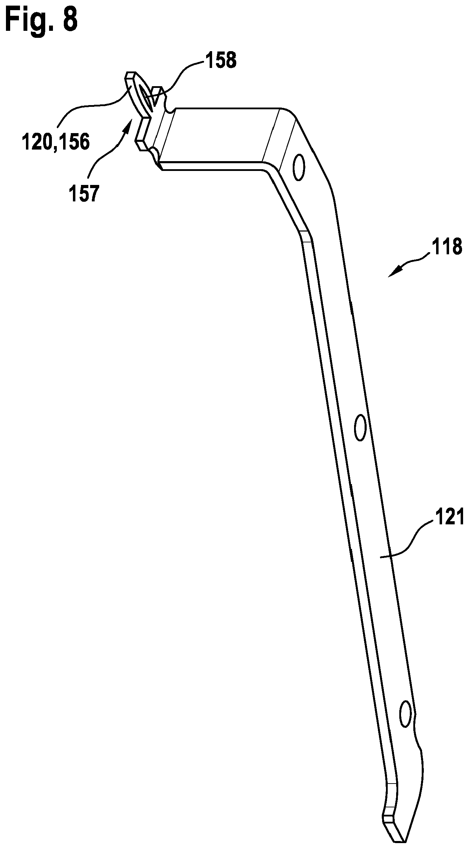

In Fig. 8 ist eine perspektivische Ansicht des Zellverbinders 118 ohne die Zellenverbindungselemente 122 gezeigt. Das Leiterplattenverbindungselement 120 erstreckt sich im Wesentlichen parallel zu der Zellverbinderschiene 121. Die Zellverbinderschiene 121 ist beispielhaft aus AL99,5 ausgebildet. Alternativ wäre auch denkbar, die Zellverbinderschiene 121 aus einer Al-Mg oder einer Al-Si Legierung auszubilden. Ebenso ist die Verwendung von Cu oder einer Cu-Legierung denkbar. Die Zellverbinderschiene 121 und die Drahtelemente 124 sind beispielhaft aus dem gleichen Material ausgebildet. Es ist alternativ allerdings auch denkbar, dass das Drahtelement 124 aus einem anderen Material, wie beispielsweise Al-Mg, Al-Si, Cu, Cu-Legierung oder dergleichen ausgebildet ist. Das Leiterplattenverbindungselement 120, insbesondere der Einpresskontakt 156, sind beispielhaft aus Cu-Sn6 ausgebildet. Alternative wäre beispielsweise aber auch eine Ausbildung aus Cu-Ni-Si denkbar.

Die Verbindung der Zellverbinderschiene 121 mit dem Leiterplattenverbindungselement 120 erfolgt vorzugsweise über eine Walzplattierung.

Um den Zellverbinder 118 bzw. die Zellverbinderschiene 121 auf die unterschiedlichen Konfigurationen der Akkupacks 100, 100a, 100b anzupassen wird die Zellverbinderschiene 121 durch ein Stanzen auf die Lagenzahl der Akkupacks 100, 100a, 100b angepasst bzw. gekürzt.

Nach dem Umspritzen der Zellverbinderschiene 121 mit dem Zellenhalter 100 werden die Akkuzellen 106 im Zellenhalter aufgenommen. Im Anschluss erfolgt die stoffschlüssige Verbindung der Akkuzellen 106 mit den Drahtelementen 124 über Drahtbonden.

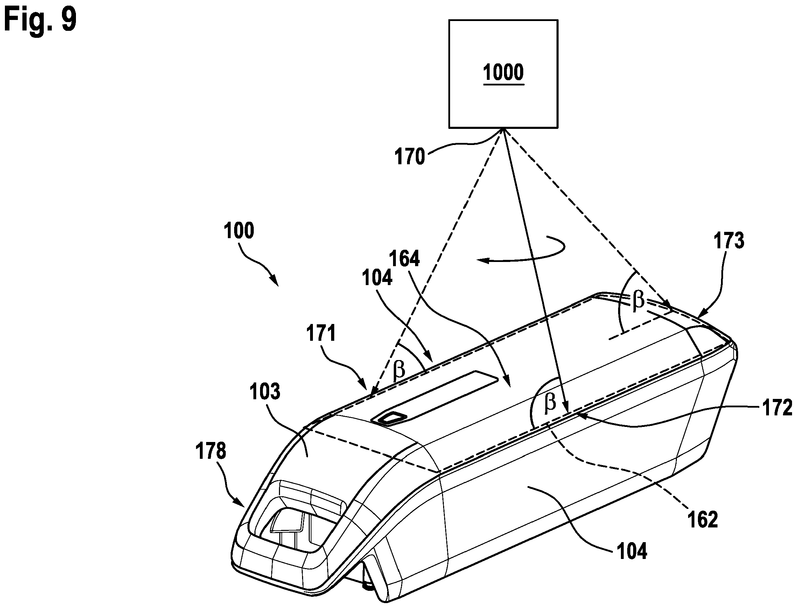

In Fig. 9 ist der Akkupack 100 in einer perspektivischen Ansicht während des Laserdurchstrahlschweißverfahrens gezeigt. Das Laserdurchstrahlschweißverfahren erfolgt mittels einer schematisch eingezeichneten Laservorrichtung 1000. Die Laservorrichtung 1000 weist eine Optik auf, mittels der der Laserstrahl ablenkbar ist. Die Laservorrichtung 1000 ist mittig über dem Gehäuse 104 des Akkupacks 100 positioniert und das Gehäuse 104 sowie die Laservorrichtung 1000 werden während dem Laserdurchstrahlschweißverfahren relativ zueinander nicht bewegt.

Zum Laserdurchstrahlschweißen wird durch die Laservorrichtung ein Laserstrahl erzeugt und auf das Gehäuse 104 gelenkt. Der Laserstrahl wird durch das erste Gehäuseteil 103 auf das zweite Gehäuseteil 105 geleitet, wo der Laserstrahl absorbiert wird. Durch die aufgenommene Energie wird zumindest das zweite Gehäuseteil 105 lokal derart erwärmt, dass dieses aufschmilzt und an dieser Stelle eine stoffschlüssige Verbindung mit dem ersten Gehäuseteil 103 erfolgt. Dabei entsteht ein innerer Fügedrück der möglichst durch einen externen Fügedruck entgegengewirkt werden sollte.

Das erste Gehäuseteil 103 weist eine Bestrahlungsfläche 162 auf. Die Bestrahlungsfläche 162 ist schematisch in Fig. 9 mit einer gestrichelten Linie angedeutet. Die Bestrahlungsfläche 162 ist auf einer der Laservorrichtung 1000 zugewandten Seite des ersten Gehäuseteils 103 bzw. auf einer Außenseite des ersten Gehäuseteils 103, angeordnet. Die Bestrahlungsfläche 162 ist umlaufend und durchgehend ausgebildet.

Das erste Gehäuseteil 103 und das zweite Gehäuseteil 105 begrenzen einen ersten Hohlraum 164 (siehe auch Fig. 4) bzw einen abgedichteten Innenraum des Gehäuses 104. Durch die Laserdurchstrahlschweißverbindung ist der erste Hohlraum 164 derart dicht ausgebildet, dass ein Eintritt von Staub und Feuchtigkeit im Wesentlichen verhindert wird. In dem ersten Hohlraum 164 ist der Zellenhalter 110 mit den Akkuzellen 106 und die Elektronik 112 des Akkupacks 100 angeordnet (siehe auch Fig. 4). Zur Begrenzung dieses ersten Hohlraums 164 liegen das erste Gehäuseteil 103 und das zweite Gehäuseteil 105 über Fügeflächen 166, 168 aneinander an. Die Fügeflächen 166, 168 erstrecken sich dabei entlang einer Spur, die im Wesentlichen rechteckig ausgebildet ist. Die Fügeflächen 166, 168 sind unterhalb der Bestrahlungsfläche 162 angeordnet.

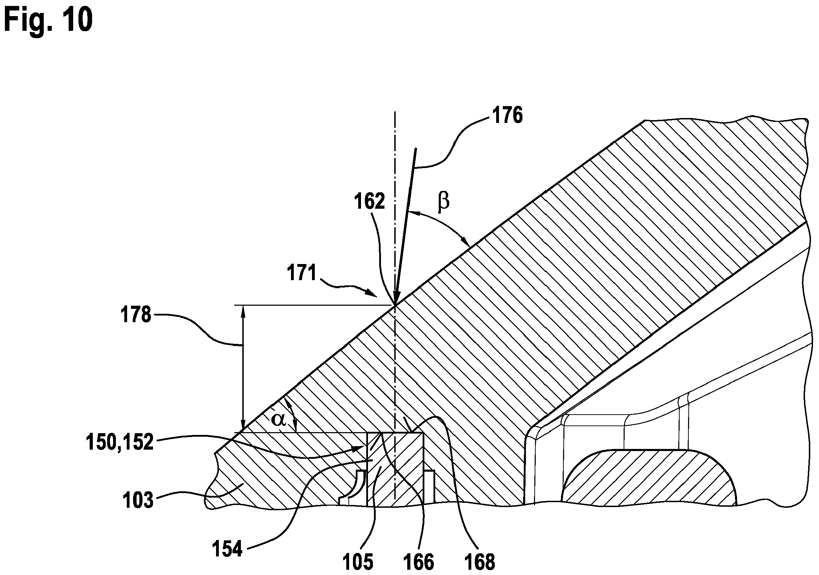

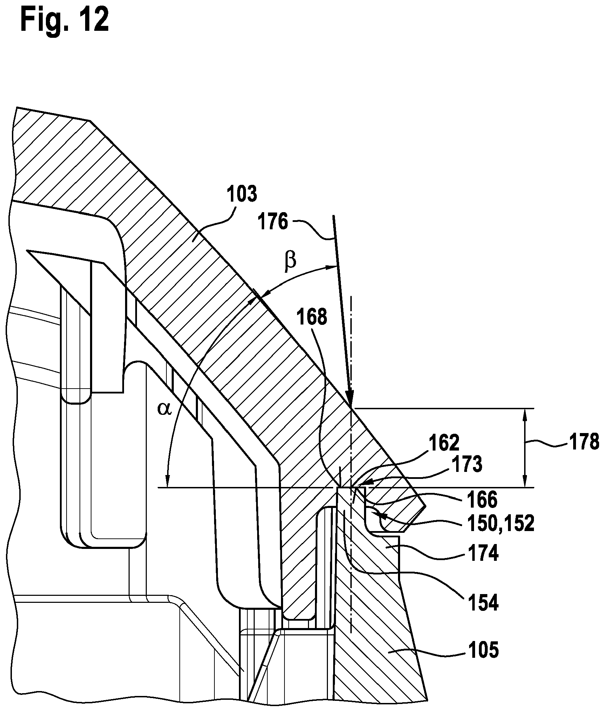

In Fig. 10 bis Fig. 12 sind Querschnitte durch einen ersten Verbindungsbereich 171, einen zweiten Verbindungsbereich 172 und einen dritten Verbindungsbereich 173 gezeigt.

Das erste Gehäuseteil 103 besteht aus einem Material, das im Wellenlängenbereich der Laservorrichtung 1000 eine hohe Transparenz aufweist. Die Transparenz liegt vorzugsweise bei über 95% bei einer Materialstärke von 2 mm. Das erste Gehäuseteil 103 weist zudem eine schwarze Farbe auf, sodass nur die übrigen Wellenlängenbereiche durch das Material des ersten Gehäuseteils 103 absorbiert werden. Das erste Gehäuseteil 103 weist zudem ein E-Modul nach ISO 527 von über 2180 MPA (1mm/min) und eine Bruchdehnung nach ISO 527 (50 mm/min) von 55 MPa bei 108% auf. Des Weiteren ist das erste Gehäuseteil 103 flammgeschützt, insbesondere nach UL 94 V0, ausgebildet. Das erste Gehäuseteil 103 ist beispielhaft aus einem Polycarbonat wie EXL9414T ausgebildet.

Das zweite Gehäuseteil 105 besteht aus einem Material, das im Wellenlängenbereich der Laservorrichtung 1000 eine hohe Absorption aufweist. Das zweite Gehäuseteil 105 ist vorzugsweise grau oder schwarz ausgebildet. Das zweite Gehäuseteil 105 weist zudem ein E-Modul nach ISO 527 von über 2100 MPA (1mm/min) und eine Bruchdehnung nach ISO 527 (50 mm/min) von 60 MPa bei 125% auf. Des Weiteren ist das zweite Gehäuseteil 105 flammgeschützt, insbesondere nach UL 94 V0, ausgebildet. Das zweite Gehäuseteil 105 ist beispielhaft aus einem Polycarbonat wie EXL9330 ausgebildet.

Die Fügeflächen 166, 168 sind im Wesentlichen eben ausgebildet und erstrecken sich parallel zueinander, sodass die Fügeflächen 166, 168 flächig aneinander anliegen. Die Bestrahlungsfläche 162 ist demgegenüber schräg zu den Fügeflächen 166, 168 ausgebildet. Die Bestrahlungsfläche 162 ist beispielhaft vollständig schräg zu den Fügeflächen 166, 168 ausgebildet. Es wäre allerdings auch denkbar, dass die Bestrahlungsfläche 162 teilweise parallel zu den Fügeflächen 166, 168 ausgebildet ist bzw. verläuft.

Um sicherzustellen, dass das Laserdurchstrahlschweißverfahren eine robuste und dichte Verbindung der Gehäuseteile 103, 105 bewirkt, wird zum einen die Bestrahlungsfläche 162 derart ausgelegt, dass die Bestrahlungsfläche 162 zu den Fügeflächen 166, 168 einen Winkel α von weniger als 70° aufweist. Der Winkel α im Akkupack 100 ist dabei vorteilhaft vollständig in einem Winkelbereich zwischen 30° und 70° ausgebildet, wodurch ein ergonomischer und kompakter Akkupack realisierbar ist. Der Winkel α im ersten Verbindungsbereich 171 entspricht dabei ca. 39°, im zweiten Verbindungsbereich 172 ca. 37° und im dritten Verbindungsbereich 173 ca. 50°.

Zudem ist die Bestrahlungsfläche 162 derart ausgebildet, dass ein Einstrahlwinkel β bezogen auf einen Fixpunkt 170 kleiner als 65° ist. Der Fixpunkt 170 entspricht dabei im Wesentlichen dem Bereich, in welchem der Laserstrahl der Laservorrichtung 1000 abgelenkt wird. Der Winkel β im Akkupack 100 ist dabei vorteilhaft vollständig in einem Winkelbereich zwischen 30° und 65° ausgebildet. Der Winkel β im ersten Verbindungsbereich 171 entspricht dabei ca. 51°, im zweiten Verbindungsbereich 172 ca. 54° und im dritten Verbindungsbereich 173 ca. 38°.

In den Figuren 10 bis 12 trifft der einfallende Laserstrahl 176 derart auf die Bestrahlungsfläche 162 auf, dass er mittig über den Fügeflächen 166, 168 angeordnet ist. Dies ist lediglich schematisch abgebildet, da abhängig von der Geometrie des ersten Gehäuseteils 103 ein leichter Versatz für eine maximale Effizienz nötig ist. Um weiterhin sicherzustellen, dass ausreichend Energie im Bereich der Fügeflächen 166, 168 absorbiert wird, ist das erste Gehäuseteil 103 derart ausgebildet, dass ein Abstand 178 zwischen der Bestrahlungsfläche 162 und der Fügefläche 166 des ersten Gehäuseteils kleiner als das Dreifache einer Breite der Wandstärkenreduzierung 154 ausgebildet ist.

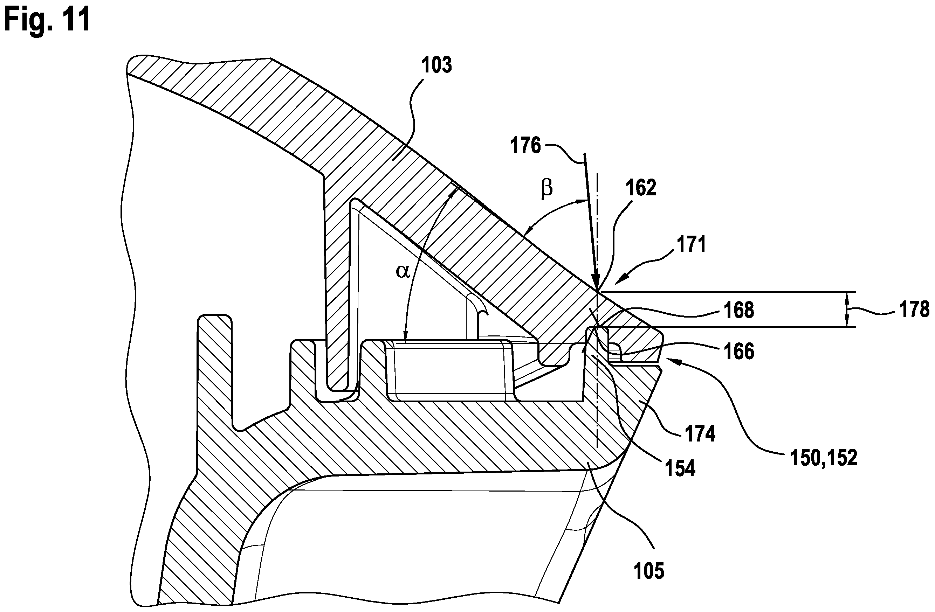

Wie bereits zuvor beschrieben, weist das Gehäuse 104 des Akkupacks 100 eine Sollbruchstelle 152 auf, die im Falle einer thermisch unkontrollierbaren Situation aufbricht und einen Gasauslass 150 bildet. Die Sollbruchstelle 152 wird beispielhaft durch das zweite Gehäuseteil 105 gebildet. Im Bereich der Fügefläche 168 des zweiten Gehäuseteils 105 weist das zweite Gehäuseteil 105 eine Wandstärkenreduzierung 154 auf. Im Bereich der Wandstärkenreduzierung 154 ist die Wandstärke des zweiten Gehäuseteils 105 im Vergleich zur benachbarten Wandstärke 174 um zumindest 25% reduziert. Im zweiten Verbindungsbereich 172 (siehe Fig. 11) entspricht die Wandstärkenreduzierung 154 über 50% der Wandstärke 174 des benachbarten Bereichs.

Die Wandstärkenreduzierung 154 kann lokal sein oder wie im gezeigten Ausführungsbeispiel entlang der gesamten Fügefläche 168 des zweiten Gehäuseteils 105. Im Falle eines Druckanstiegs im inneren des Gehäuses 104, insbesondere im ersten Hohlraum 164, ist die Wandstärkenreduzierung 154 derart ausgelegt, dass das Gehäuse 104 im Bereich der Wandstärkenreduzierung 154 in unmittelbarer Nähe der Fügefläche 168 zuerst aufbricht.

Der Akkupack 100 weist zudem einen zweiten Hohlraum 178 auf, der benachbart zu dem ersten Hohlraum 164 angeordnet ist. Im Gegensatz zu dem ersten Hohlraum 164 wird der zweite Hohlraum 178 nicht durch das Laserschweißverfahren abgedichtet, sondern lediglich über eine kraft- und formschlüssige Verbindung der Gehäuseteile 103, 105 zusammengehalten. Die korrespondierenden Kraft- und Formschlusselemente sind dabei auf nicht dargestellten Innenflächen der Gehäuseteil 103, 105 angeordnet.

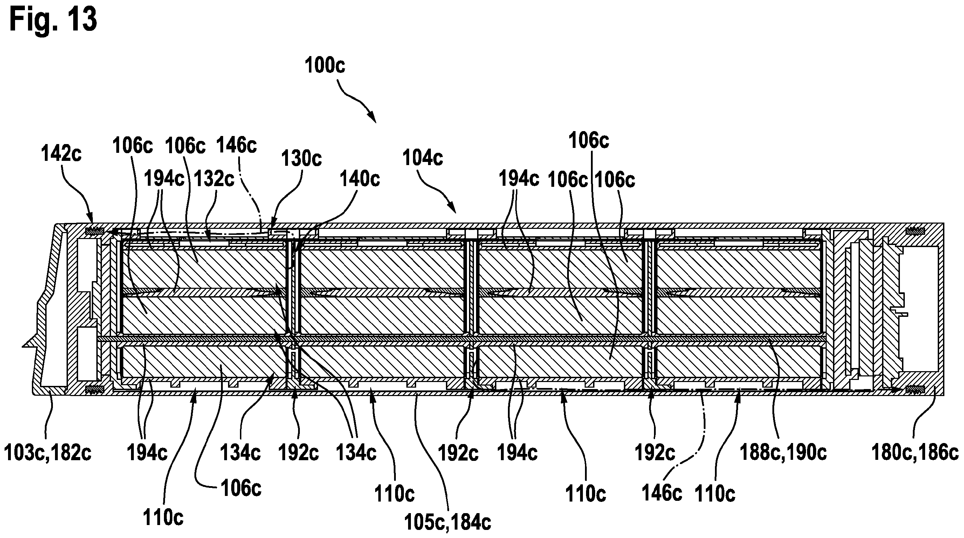

In Fig. 13 ist eine alternativ Ausführungsform eines Akkupacks 100c mit einer alternativen Ausführungsform einer Schutzvorrichtung 130c in einem Längsschnitt gezeigt.

Der Akkupack 100c ist als ein Akkupack 100c für ein Elektrofahrrad ausgebildet. Der Akkupack 100c ist als ein Wechselakkupack ausgebildet, der lösbar mit dem Elektrofahrrad verbindbar ist. Der Akkupack 100c weist ein Gehäuse 104c auf, das drei als Außengehäuseteile ausgebildete Gehäuseteile 103c, 105c, 180c umfasst. Das Gehäuse 104c weist eine im Wesentlichen zylinderförmige Form auf. Das erste Gehäuseteil 103c ist als eine Endkappe 182c ausgebildet, die das zweite Gehäuseteil 105c, das als zylindrischer Grundkörpers 184c ausgebildet ist, auf einer Seite abschließt. Das dritte Gehäuseteil 180c ist ebenfalls als eine Endkappe 186c ausgebildet, die den zylindrischen Grundkörper 184c auf einer gegenüberliegenden Seite abschließt.

Das Gehäuse 104c weist eine nicht näher dargestellte Akkuschnittstelle auf, über die der Akkupack 100c lösbar mit dem Elektrofahrrad mechanisch und elektrisch verbindbar ist. Der Akkupack 100c ist derart ausgebildet, dass er zur Verbindung in den Rahmen des Elektrofahrrads aufnehmbar ist, beispielhaft über ein seitliches oder axiales Einschieben in ein Unterrohr des Elektrofahrrads.

Im zylindrischen Grundkörper 184c sind die Akkuzellen 106c angeordnet. Die Ackuzellen 106c sind dabei in Einzelzellenaufnahmen 134c von Zellenhalter 110c aufgenommen. Die Zellenhalter 110c sind dem Gehäuse 104c zugeordnet. Die Zellenhalter 110c weisen jeweils zehn Einzelzellenaufnahmen 134c für zehn Ackuzellen 106c auf. Der Akkupack 100c umfasst vier Zellenhalter 110c, die derart in Reihe bzw. hintereinander angeordnet sind, dass jede Akkuzelle 106c ein oder zwei koaxial angeordnete benachbarte Akkuzellen 106c aufweist. Die Zellenhalter 110c sind über zumindest ein Verspannungselement 188c axial miteinander verspannt. Das Verspannungselement 188c ist beispielhaft als eine Speiche 190c ausgebildet.

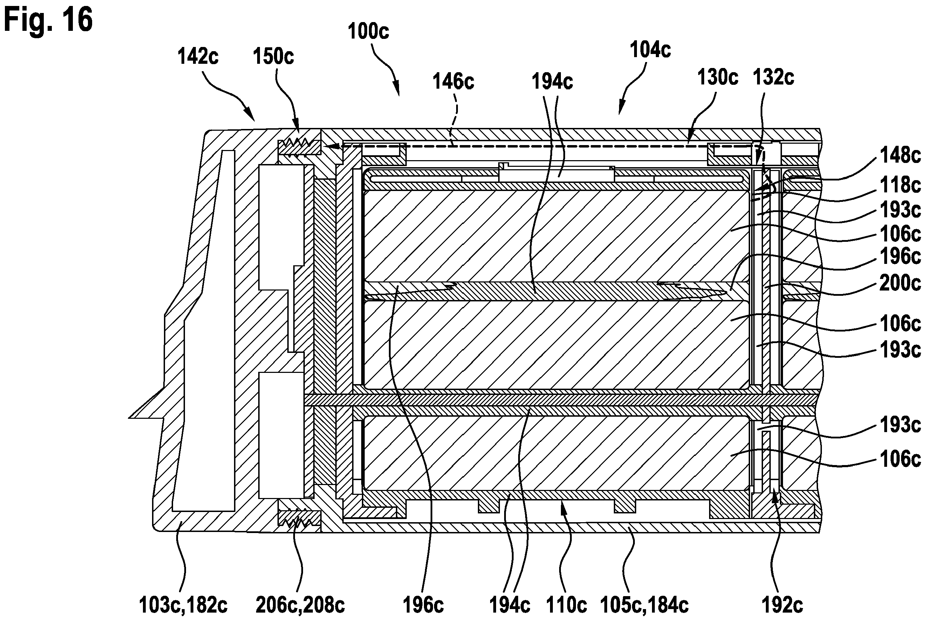

Zwischen zwei benachbarten Zellenhaltern 110c ist jeweils eine Trennwand 192c angeordnet. Die Trennwand 192c ist insbesondere zur elektrischen Isolation der benachbarten Akkuzellen 106c ausgebildet. Zudem umfassen die Zellenhalter 110c Dämpfungselemente 193c, die an den Zellpolen 138c der Akkuzellen 106c bzw. an den Zellverbindern 118c anliegen, um diese vor einer zu hohen Krafteinwirkung zu schützen (siehe Fig. 16).

Die Schutzvorrichtung 130c des Akkupacks 100c weist eine erste Schutzeinheit 132c zur thermischen Isolierung und mechanischen Stabilisierung von benachbarten Akkuzellen 106c auf. Die erste Schutzeinheit 132c wird im Wesentlichen durch die Zellenhalter 110c und die Trennwände 192c ausgebildet.

Die Zellenhalter 110c umschießen die Akkuzellen 106 entlang ihrer Mantelflächen im Wesentlichen vollständig. An den Stirnseiten bzw. den Zellpolen 138c werden die Akkuzellen 106c von den Trennwänden 192c gegenüber den benachbarten Zellenhalter 110c bzw. Akkuzellen 106c geschützt. Die Zellenhalter 110c und die Trennwände 192c weisen ein mechanisch und thermisch widerstandsfähiges Material auf. Beispielhaft sind die Zellenhalter 110c und die Trennwände 192c zumindest teilweise aus dem gleichen Material ausgebildet. Sowohl der Zellenhalter 110c und die Trennwände 192c bestehen aus mehreren Komponenten und sind einteilig ausgebildet.

Die Zellenhalter 110c weisen eine Hartkomponente 194c, die aus dem mechanisch und thermisch widerstandsfähigen Material ausgebildet ist, und eine Weichkomponente 196c, die zur radialen Verspannung der Akkuzellen 106c in den Einzelzellenaufnahmen 134c vorgesehen ist, auf. Die Zellenhalter 110c sind beispielhaft über ein 2K-Spritzgußverfahren herstellbar.

Zudem weist die Schutzvorrichtung 130c eine zweite Schutzeinheit 140c auf, die zur elektrischen Trennung von Akkuzellen 106c bei einer thermisch unkontrollierbaren Situation ausgebildet sind.

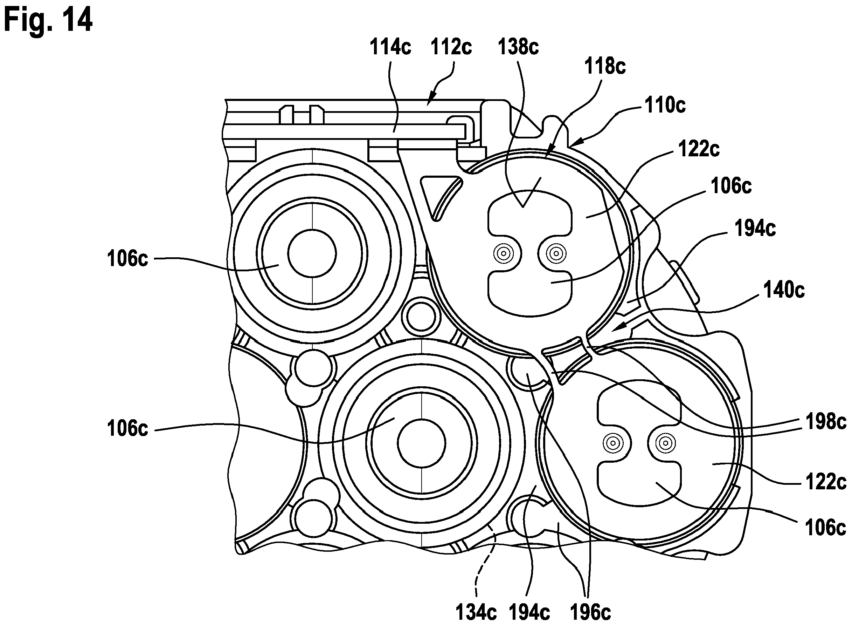

In Fig. 14 ist eine Teildraufsicht auf einen Zellenhalter 110c mit eingesetzten Ackuzellen 106c gezeigt. Die Akkuzellen 106c sind elektrisch mittels Zellverbindern 118c, insbesondere Zellenverbindungselemente 122c, miteinander verbunden. Die Zellenverbindungselemente 122c sind dabei stoffschlüssig mit den Zellpolen 138c der Akkuzellen 106c über ein Widerstandsschweißverfahren verbunden.

Der Zellverbinder 118c verbindet die Akkuzellen 106c zudem mit einer Leiterplatte 114c der Elektronik 112c des Akkupacks 100c über eine nicht dargestellte stoffschlüssige Verbindung. Der Zellverbinder 118c ist beispielhaft zur Leistungsabgabe vorgesehen.

Die zweite Schutzeinheit 140 wird durch das Zellenverbindungselement 122 gebildet. Der Zellverbinder 118c weist je zu verbindender Akkuzelle 106 ein Zellenverbindungselement 122c auf, die den Zellpol 138c der jeweiligen Akkuzelle 106c größtenteils abdecken. Die Zellenverbindungselemente 122c eines Zellverbinders 118c sind einstückig ausgebildet und über zumindest eine, beispielhaft zwei, Brücken 198c miteinander verbunden. Die Brücken 198c sind derart ausgelegt, dass durch die erhöhte Temperatur der Akkuzellen 106c bei einer thermisch unkontrollierbaren Situation diese in einem Zeitraum von unter 1 s schmelzen und die Akkuzellen 106c elektrisch trennen. Die Brücken 198c bilden somit eine Schmelzsicherung aus. Die Schmelzsicherung ist insbesondere derart ausgebildet, dass ein Auslösestrom zumindest dem Kurzschlussstrom einer einzelnen Akkuzelle bei zumindest 20% SoC (engl. "state of charge"), vorzugsweise zumindest 30% SoC, entspricht.

Zudem weist die Schutzvorrichtung 130c eine dritte Schutzeinheit 142c zu einem gezielten Auslass von Gas bei einer thermisch unkontrollierbaren Situation auf. Die dritte Schutzeinheit 142c weist mehrere Gaskanäle 146c zum Transport des Gases aus den Akkuzellen 106c bei einer Beschädigung nach außen auf. Die Gaskanäle 146c weisen dabei einen Einlass 148c und einen Gasauslass 150c auf.

Über den Einlass 148c wird das Gas aus den Akkuzellen 106c in dem Gaskanal 146c aufgenommen. Der Akkupack 100c, insbesondere die Trennwände 192c, weisen beispielhaft je Akkuzelle 106c einen Einlass 148c auf, sodass die Gaskanäle 146c im Bereich des Einlass 148c teilweise getrennt voneinander ausgebildet sind. Der Einlass 148c ist dabei unmittelbar im Bereich der Zellpole 138c der Akkuzellen 106c angeordnet, um ausströmendes Gas direkt aufzunehmen.

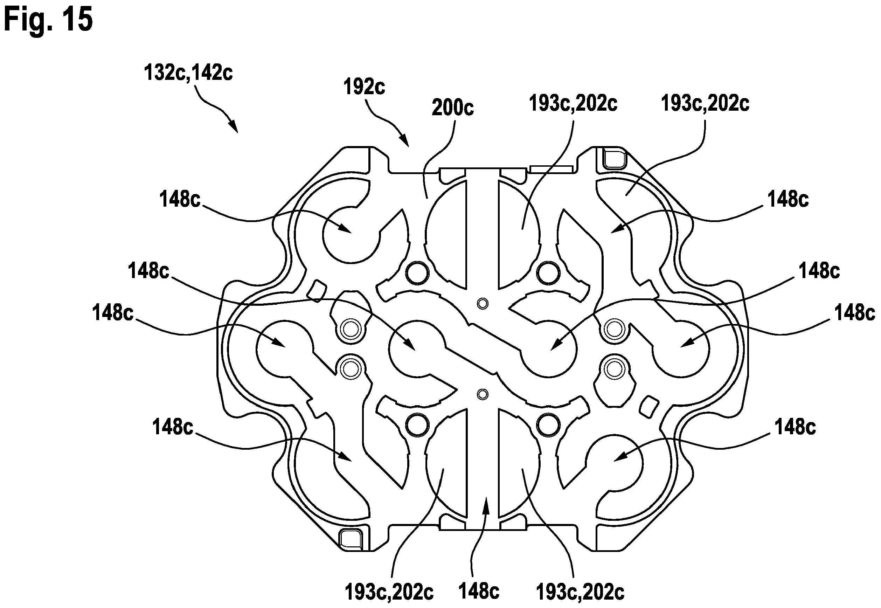

Eine beispielhafte Trennwand 192c ist in Fig. 15 in einer Vorderansicht gezeigt. Die Trennwand 192c umfasst beispielhaft zwei Komponenten, eine Hartkomponente 200c aus einem mechanisch und thermisch widerstandsfähigen Material und eine Weichkomponente 202c, die die Dämpfungselemente 193c bildet. Die Dämpfungselemente 193c liegen im montierten an den Akkuzellen 106c bzw. an den Zellverbindern 118c an. Die Dämpfungselemente 193c sind derart ausgebildet, dass sie für Gas nicht oder nur schwer zu durchdringen sind. Die Dämpfungselemente 193c umschließen je Akkuzelle 106c eine Ausnehmung 204c, die den Einlass 148c des Gaskanals 146c bildet. Somit kann bei einer thermisch unkontrollierbaren Situation das aus der Akkuzelle 106c austretende Gas gezielt und gerichtet in die Gaskanäle 146c aufgenommen werden. Die Hartkomponente 200c der Trennwände 192c und die Hartkomponente 194c der Zellenhalter 100c bestehen beispielhaft aus PA6-GF35 und sind flammgeschützt ausgebildet.

Das ausströmende Gas wird im Gaskanal 146 zu dem Gasauslass 150c geführt. Der Gasauslass 150c ist derart ausgebildet, dass der Gasauslass geschlossen ist und bei Eintreten einer thermisch unkontrollierbaren Situation selbsttätig geöffnet wird.

Der Akkupack 100c umfasst zwei Gasaulässe 150c, die zwischen den Gehäuseteilen 103c, 104c, 180c angeordnet sind. Die Gasauslässe 150c umfassen jeweils ein elastisches Dichtelement 206c (siehe vergrößerte Ansicht in Fig. 16). Das elastische Dichtelement 206c ist beispielhaft als Lippendichtring 208c ausgebildet. Das elastische Dichtelement 206c ist derart ausgebildet, dass ohne Beschädigung oder Defekt des Akkupacks 100c dieser durch das elastische Dichtelement 206c abgedichtet ist. Bei einer thermisch unkontrollierbaren Situation und dem damit verbundenen Druckanstieg innerhalb des Akkupacks 100c wird das elastische Dichtelement 206c relativ zu den Gehäuseteilen 103c, 105c, 180c bewegt bzw. umgeklappt, wodurch vorteilhaft ein schlagartiger Druckabbau erfolgen kann.

## Patentansprüche

1. Akkupack mit einem Gehäuse (104), mit zumindest zwei Akkuzellen (106), mit einer Schutzvorrichtung (130) zum Schutz des Akkupacks (100) bei einer thermisch unkontrollierbaren Situation, wobei die Schutzvorrichtung (130) eine erste Schutzeinheit (132) zur thermischen Isolierung und mechanischen Stabilisierung benachbarter Akkuzellen (160), eine zweite Schutzeinheit (140) zur elektrischen Trennung von Akkuzellen (106) bei einer thermisch unkontrollierbaren Situation und eine dritte Schutzeinheit (142) zu einem gezielten Auslass von Gas bei einer thermisch unkontrollierbaren Situation aufweist.

2. Akkupack nach Anspruch 1, **dadurch gekennzeichnet, dass** das Gehäuse (104) einen Zellenhalter (110) mit zumindest zwei Einzelzellenaufnahmen (134) aufweist, wobei der Zellenhalter (110) der ersten Schutzeinheit (134) zugeordnet ist.

3. Akkupack nach Anspruch 2, **dadurch gekennzeichnet, dass** die Einzelzellenaufnahmen (134) derart ausgebildet sind, dass die Akkuzellen (106) entlang ihrer Mantelfläche im Wesentlichen vollständig umschlossen sind.

4. Akkupack nach einem der Ansprüche 2 oder 3, **dadurch gekennzeichnet, dass** die Einzelzellenaufnahmen (134) zumindest teilweise aus einem thermisch widerstandsfähigen Material ausgebildet ist, wobei das thermisch widerstandsfähige Material flammgeschützt ausgebildet ist.

5. Akkupack nach einem der vorhergehenden Ansprüche, **dadurch gekennzeichnet, dass** der Akkupack (100) zumindest einen Zellverbinder (118) zur elektrischen Verbindung der Akkuzellen (106) aufweist, der der zweiten Schutzeinheit (140) zugordnet ist.

6. Akkupack nach Anspruch 5, **dadurch gekennzeichnet, dass** die zweite Schutzeinheit (140) eine Schmelzsicherung aufweist, die zwischen elektrisch parallel miteinander verbundenen Akkuzellen (106) angeordnet ist.

7. Akkupack nach Anspruch 6, **dadurch gekennzeichnet, dass** die Schmelzsicherung derart ausgebildet ist, dass die Schmelzsicherung in einem Zeitbereich von unter 10 s, insbesondere unter 5 s, vorzugsweise unter 1 s, auslöst.

8. Akkupack nach einem der vorhergehenden Ansprüche, **dadurch gekennzeichnet, dass** der Akkupack (100) zumindest einen Gaskanal (146) aufweist, der der dritten Schutzeinheit (142) zugeordnet ist.

9. Akkupack nach Anspruch 8, **dadurch gekennzeichnet, dass** der Akkupack (100) je Akkuzelle (106) einen Gaskanal (146) aufweist, wobei die Gaskanäle (146) zumindest teilweise voneinander getrennt ausgebildet sind.

10. Akkupack nach einem der Ansprüche 8 oder 9, **dadurch gekennzeichnet, dass** der Akkupack (100) einen Gasauslass (150) aufweist, über den bei einer thermisch unkontrollierbaren Situation ein aus der Akkuzelle (106) austretendes Gas aus dem Gehäuse (104) austreten kann.

11. Akkupack nach Anspruch 10, **dadurch gekennzeichnet, dass** der Gaskanal (146) mit dem Gasauslass (150) verbunden ist.

12. Akkupack nach einem der Ansprüche 10 oder 11, **dadurch gekennzeichnet, dass** der Gasauslass (150c) ein elastisches Dichtelement (206c) aufweist, das derart elastisch ausgebildet ist, dass das Dichtelement (206c) abhängig vom Gasdruck innerhalb des Gehäuses (104c) relativ zu dem Gehäuse (104c) beweglich ausgebildet ist.

13. Akkupack nach einem der Ansprüche 10 oder 11, **dadurch gekennzeichnet, dass** der Gasauslass (150) als eine Sollbruchstelle (152) des Gehäuses (104) ausgebildet ist, die derart ausgebildet ist, dass bei Überschreiten eines Gasdrucks innerhalb des Gehäuses (104) eine Öffnung im Gehäuse (104) entsteht.

14. Akkupack nach einem der Ansprüche 10 bis 13, **dadurch gekennzeichnet, dass** der Gasauslass (150) derart ausgebildet ist, dass eine Bewegung oder ein Aufbrechen des Gasauslasses in einem Druckbereich zwischen 1 Bar und 5 Bar, insbesondere zwischen 1,3 Bar und 3 Bar, vorzugsweise zwischen 1,5 Bar und 2,5 Bar, erfolgt.

15. Akkupack nach einem der vorhergehenden Ansprüche, **dadurch gekennzeichnet, dass** der Akkupack (100c) zwei Zellenhalter (110c) aufweist, wobei zwischen den Zellenhaltern (110c) eine Trennwand (192c) angeordnet ist, wobei die Trennwand (192c) der ersten Schutzeinheit (130c) und der dritten Schutzeinheit (142c) zugeordnet ist.
